# EUROPEAN PATENT SPECIFICATION

(11) **EP 4 599 290 B1**
(45) Date of publication and mention of the grant of the patent: **01.04.2026**
(21) Application number: 23822085.9
(22) Date of filing: 04.12.2023
(51) Int. Cl.: G02C 7/08, G02C 7/04

(54) **OPHTHALMIC LENSES FOR CONTROL OF MYOPIC PROGRESSION AND METHODS**
OPHTHALMISCHE LINSEN ZUR KONTROLLE DES MYOPISCHEN FORTSCHREITENS UND VERFAHREN
LENTILLES OPHTALMIQUES POUR LA COMMANDE DE LA PROGRESSION MYOPIQUE ET PROCÉDÉS

(30) Priority: 09.12.2022 US 202263431471 P
(43) Date of publication of application: 13.08.2025
(73) Proprietor: CooperVision International Limited, Fareham PO15 5RL (GB)
(72) Inventor: LAZON DE LA JARA, Percy, Pleasanton, California 94588 (US); CHAMBERLAIN, Paul, Pleasanton, California 94588 (US); ARUMUGAM, Baskar, Pleasanton, California 94588 (US); MARULLO, Rachel, Pleasanton, California 94588 (US)
(74) Representative: Abel & Imray LLP
(86) International application number: PCT/GB2023/053125
(87) International publication number: WO 2024/121539

(56) References cited:
- US-A1- 2020 363 654
- US-A1- 2021 356 767
- US-A1- 2022 252 904

## Description

The present disclosure concerns ophthalmic lenses for controlling myopic progression, systems for controlling myopic progression, spectacles for controlling myopic progression and, not covered by the claimed subject-matter, methods for controlling myopic progression.

### Background

Many people, including children and adults require ophthalmic lenses to correct for myopia (short-sightedness). Such lenses may also be configured to create myopic defocus in order to control myopic progression. In this connection, an inner distance correction zone provides correction of myopia, and one or more concentric outer defocussing regions of relatively more positive optical power are provided. The defocussing regions focus light in front of the retina. Without wishing to be bound by theory, it is thought that focussing of some light in front of the retina may help inhibit lengthening of the eyeball, which lengthening causes worsening of the myopia. Some spectacles for controlling progression of myopia include lenslets to provide defocussing regions. And, some spectacles have been described that include light scattering elements to scatter light and reduce contrast rather than defocussing the light. Such ophthalmic lenses typically have a central zone that has a refractive power to correct for myopia, one contact lens product has such a central zone with a relatively smaller central zone providing a relatively larger Add power, and then one or more defocusing zones or light-scattering zones. All of these ophthalmic lenses are characterized by a fixed refractive power to correct distance vision in a myopic individual, and a non-changeable defocus or light-scattering zones. While some myopia control ophthalmic lenses, such as MISIGHT (CooperVision), have been shown to significantly reduce myopia progression in children, there remains a need to improve ophthalmic lenses by either improving visual quality, improving the reduction in myopic progression, or improving the wearing experience, for example. US2022/0252904 describes an ophthalmic lens including a first region corresponding to a first area of an optical surface of the ophthalmic lens, and a second region corresponding to a second area of the optical surface of the ophthalmic lens. US2021/0356767 describes an apparatus to treat refractive error of an eye comprising an electroactive component configured to switch between a light scattering configuration to treat refractive error of the eye and a transparent configuration to allow normal viewing. US2020/0363654 teaches a medical device for management of an axial length growth of an eye.

The present invention seeks to provide an improved visual experience, and/or to provide a more adaptable lens for controlling myopic progression.

### Summary

In accordance with a first aspect of the invention, there is provided an ophthalmic lens for controlling myopic progression. The lens comprises a distance vision lens portion for focussing light to a first location, thereby correcting myopia, and a plurality of electrically-addressable lens portions addressable to focus light to a second location closer to the lens than the first location. At least one of the plurality of electrically-addressable lens portions is configured to focus light to the first location in the absence of an electrical signal to the electrically-addressable lens portion. At least one of the plurality of electrically-addressable lens portions is configured to focus light to a second location in the absence of an electrical signal to the electrically-addressable lens portion. The second location is optionally the same for each of the plurality of electrically-addressable lens portions. In use, at least one electrically-addressable lens portion is addressable to focus light in front of the retina of the wearer.

In accordance with a second aspect of the invention, there is provided a system for controlling myopic progression comprising an ophthalmic lens for controlling myopic progression in accordance with the first aspect of the present invention. The system also comprises a user control module for controlling operation of the ophthalmic lens.

In accordance with a third aspect of the invention, there is provided spectacles comprising at least one ophthalmic lens for controlling myopic progression in accordance with the first aspect of the present invention.

In accordance with a merely illustrative embodiment, there is provided a method of controlling myopic progression.

It will, of course, be appreciated that features described in relation to one aspect of the present disclosure may be incorporated into other aspects of the present disclosure.

### Description of the drawings

FIG. 1A is a schematic plan view of an example of an ophthalmic lens (in this case, a soft contact lens) in accordance with a merely illustrative embodiment not covered by the claimed subject matter;
FIG. 1B is a schematic cross-sectional view of the contact lens of FIG. 1A taken across AA;
FIG. 1C is a schematic plan view of the contact lens of FIG. 1A and FIG. 1B showing the arrangement of the director of the liquid crystal when the liquid crystal is in an unswitched state;
FIG. 1D is a schematic plan view of the contact lens of FIG. 1A and FIG. 1B showing the arrangement of the director of the liquid crystal when the liquid crystal is in a switched state;
FIG. 1E is a schematic cross-sectional view of the liquid crystal cell used in the lens of FIGS. 1A, 1B, 1C and 1D, showing the arrangement of the liquid crystal cell when the liquid crystal is in an unswitched state;
FIG. 1F is a schematic cross-sectional view of the liquid crystal cell used in the lens of FIGS. 1A, 1B, 1C and 1D, showing the arrangement of the liquid crystal cell when the liquid crystal is in a switched state;
FIG. 2 is a schematic plan view of a further example of an ophthalmic lens (in this case, a soft contact lens) in accordance with an embodiment of the present invention, with two hemi-annular electrically-addressable light-focussing lens portions;
FIG. 3 is a schematic plan view of an example of an ophthalmic lens (in this case, a soft contact lens) in accordance with an embodiment of the present invention with four quarter-annular electrically-addressable light-focussing lens portions;
FIG. 4A is a schematic plan view of another ophthalmic lens (a contact lens, in this case) in accordance with an embodiment of the present invention, with two annular electrically-addressable light-focussing lens portions;
FIG. 4B is a schematic cross-sectional view of the contact lens of FIG. 4A taken across BB;
FIG. 5A is a schematic plan view of yet another ophthalmic lens (a contact lens, in this case) in accordance with an embodiment of the present invention, with two annular electrically-addressable light-focussing lens portions
FIG. 5B is a schematic cross-sectional view of the contact lens of FIG. 5A taken across CC;
FIG.6 is a schematic plan view of an example of a pair of spectacles comprising two ophthalmic lenses in accordance with a merely illustrative embodiment not covered by the claimed subject matter, each lens comprising one annular electrically-addressable light-focussing lens portion;
FIG.7 is a schematic plan view of an example of a pair of spectacles comprising two ophthalmic lenses in accordance with an embodiment of the present invention, each lens comprising two hemi-annular electrically-addressable light-focussing lens portions;
FIG.8 is a schematic plan view of another example of a pair of spectacles comprising two ophthalmic lenses in accordance with an embodiment of the present invention, each lens comprising two hemi-annular electrically-addressable light-focussing lens portions;
FIG.9 is a schematic plan view of yet another an example of a pair of spectacles comprising two ophthalmic lenses in accordance with an embodiment of the present invention, each lens comprising four quarter-annular electrically-addressable light-focussing lens portions;
FIG. 10 is a schematic plan view of another example of an ophthalmic lens (in this case, a contact lens) in accordance with a merely illustrative embodiment not covered by the claimed subject matter;
FIG. 11 is a schematic representation of an example of a system for controlling myopic progression in accordance with an embodiment of the present invention;
FIG. 12 is a schematic representation of an example of a method in accordance with a merely illustrative embodiment not covered by the claimed subject matter;
FIG. 13A is a schematic cross-sectional view of an ophthalmic contact lens in accordance with a merely illustrative embodiment not covered by the claimed subject matter, when the electrically-switchable lens portion is in an unswitched state; and
FIG. 13B is a schematic cross-sectional view of an ophthalmic contact lens in accordance with a merely illustrative embodiment not covered by the claimed subject matter, when the electrically-switchable lens portion is in a switched state.

### Detailed Description

In accordance with a first aspect of the present invention, there is provided an ophthalmic lens for controlling myopic progression, the ophthalmic lens comprising a distance vision lens portion for correcting myopia by focussing light to a first location and a plurality of electrically-addressable lens portions addressable to focus light to a second location closer to the lens than the first location. At least one of the plurality of electrically-addressable lens portions is configured to focus light to the first location in the absence of an electrical signal to the electrically-addressable lens portion. At least one of the plurality of electrically-addressable lens portions is configured to focus light to a second location in the absence of an electrical signal to the electrically-addressable lens portion. The second location is optionally the same for each of the plurality of electrically-addressable lens portions.

In use, the second location is optionally in front of a retina of a wearer.

For the avoidance of doubt, "electrically-addressable" indicates that the optical power of the electrically-addressable lens portion may be changed by the application of an appropriate electrical signal. The optical power or refractive ability of an electrically-addressable lens portion typically depends on the shape of the electrically-addressable lens portion and the refractive index of the electrically-addressable lens portion relative to any surrounding material. For example, the application of an appropriate electrical signal may cause the shape of the electrically-addressable lens portion to be changed. Alternatively or additionally, the application of an appropriate electrical signal may cause the refractive index of the electrically-addressable lens portion to be changed. The nature of the appropriate electrical signal will depend on the nature of the electrically-addressable lens portion. The ophthalmic lens of the first aspect of the present invention provides a lens portion for correcting a wearer's myopia, while providing an electrically-addressable lens portion that can focus light in front of the retina. The focussing of light in front of the retina is believed to slow elongation of the eyeball that causes an increase in myopia. Furthermore, the ophthalmic lens of the first aspect of the invention may be used to provide different optical powers that may be needed for different wearers, and therefore the ophthalmic lens may be more adaptable than conventional lenses. In other words, the ophthalmic lens may be adjustable or tunable so that the ophthalmic lens can provide different optical powers. Furthermore, the extent to which light is focussed in front of the retina may be controlled.

For the avoidance of doubt, "ophthalmic lens" is sometimes referred to hereinafter as "lens". Likewise, "electrically-addressable lens portion" is sometimes referred to hereinafter as "addressable lens portion" or "electrically-addressable portion".

The distance vision lens portion is optionally an inner lens portion. At least one of the plurality of electrically-addressable lens portions is optionally an outer lens portion. Optionally more than one of the plurality of electrically-addressable lens portions may be outer lens portions. Such an arrangement may be effective in providing corrected vision for a wearer, and may also provide treatment that slows the progress of myopia. Two of the plurality of electrically-addressable lens portions may be located opposite one another, either side of a centre of the ophthalmic lens. The electrically-addressable lens portion(s) need not be an outer lens portion. For example, at least one of the plurality of electrically-addressable lens portions may be located inward of the distance vision lens portion. For example, at least one of the plurality of electrically-addressable lens portions may be located inward of an annular distance vision lens portion. The distance vision lens portion may be a central lens portion. The at least one electrically-addressable lens portion may be concentrically arranged with the distance vision lens portion. This may be a particularly convenient arrangement.

At least one of the plurality of electrically-addressable lens portions, optionally more than one and optionally each of the plurality of electrically-addressable lens portions, may be annular. Such an arrangement facilitates the modulation of light around a more central region.

At least one, optionally more than one and optionally each of the plurality of electrically-addressable lens portions may be biconcave, biconvex or convex-concave in cross-section.

. The ophthalmic lens may comprise a plurality of concentric, optionally annular, addressable lens portions. Such an arrangement with a plurality of electrically-addressable lens portions may facilitate greater control of optical properties. If the ophthalmic lens comprises a plurality of electrically-addressable lens portions addressable to focus light to a second location closer to the lens than the first location, then the second location need not be the same location for every electrically-addressable portion.

For a contact lens, the radial dimension of at least one, optionally more than one, and optionally each of the plurality of electrically-addressable lens portions is optionally at least 0.5mm, optionally at least 1mm, optionally at least 1.5mm, optionally at least 2mm, optionally at least 2.5mm, optionally at least 3mm and optionally at least 3.5mm. The radial dimension may be a chord dimension.

For a contact lens, the radial dimension at least of one, optionally more than one, and optionally each of the plurality of electrically-addressable lens portions is optionally no more than 6mm, optionally no more than 5.5mm, optionally no more than 5mm, optionally no more than 4.5mm, optionally no more than 4mm, optionally no more than 3.5mm and optionally no more than 3mm. The radial dimension may be a chord dimension.

For a contact lens, the radial position of at least one, optionally more than one, and optionally each of the plurality of electrically-addressable lens portions from the centre of the contact lens may be at least 1mm, optionally at least 1.5mm, optionally at least 2mm and optionally at least 2.5mm from the centre of the contact lens. The radial position of the respective electrically-addressable lens portion may be measured from the centre of the contact lens to the centre (radially-speaking) of the respective electrically-addressable lens portion. The radial position may be a chord position.

For a contact lens, the radial position of at least one, optionally more than one, and optionally each of the plurality of electrically-addressable lens portions from the centre of the lens may be no more than 5mm, optionally no more than 4.5mm, optionally no more than 4mm, optionally no more than 3.5mm, optionally no more than 3mm, optionally no more than 2.5mm and no more than 2mm from the centre of the contact lens. The radial position of the respective electrically-addressable lens portion may be measured from the centre of the contact lens to the centre (radially-speaking) of the respective electrically-addressable lens portion. The radial position may be a chord position.

For a contact lens, the radial dimension of the distance vision lens portion may optionally be at least 0.5mm, optionally at least 1mm, optionally at least 1.5mm, optionally at least 2mm, optionally at least 2.5mm, optionally at least 3mm and optionally at least 3.5mm.

For a contact lens, the radial dimension of the distance vision lens portion may optionally be no more than 8mm, optionally no more than 7mm, optionally no more than 6.5mm, optionally no more than 6mm, optionally no more than 5.5mm, optionally no more than 5mm, optionally no more than 4.5mm, optionally no more than 4mm, optionally no more than 3.5mm and optionally no more than 3mm.

For a spectacle lens, the radial dimension of at least one, optionally more than one, and optionally each of the plurality of electrically-addressable lens portions is optionally at least 2mm, optionally at least 3mm, optionally at least 5mm, optionally at least 7mm, optionally at least 9mm, optionally at least 10mm and optionally at least 20mm. The radial dimension may be a chord dimension.

For a spectacle lens, the radial dimension at least of one, optionally more than one, and optionally each of the plurality of electrically-addressable lens portions is optionally no more than 30mm, optionally no more than 25mm, optionally no more than 20mm, optionally no more than 15mm, optionally no more than 12mm, optionally no more than 10mm and optionally no more than 8mm. The radial dimension may be a chord dimension.

For a spectacle lens, the radial position of at least one, optionally more than one, and optionally each of the plurality of electrically-addressable lens portions from the centre of the spectacle lens may be at least 3mm, optionally at least 5mm, optionally at least 10mm and optionally at least 15mm from the centre of the lens. The radial position of the respective electrically-addressable lens portion may be measured from the centre of the lens to the centre (radially-speaking) of the respective electrically-addressable lens portion. The radial position may be a chord position.

For a spectacle lens, the radial position of at least one, optionally more than one, and optionally each of the plurality of electrically-addressable lens portions from the centre of the lens may be no more than 50mm, optionally no more than 45mm, optionally no more than 40mm, optionally no more than 35mm, optionally no more than 30mm, optionally no more than 25mm, optionally no more than 20mm and optionally no more than 15mm from the centre of the lens. The radial position of the respective electrically-addressable lens portion may be measured from the centre of the spectacle lens to the centre (radially-speaking) of the respective electrically-addressable lens portion. The radial position may be a chord position.

For a spectacle lens, the radial dimension of the distance vision lens portion may optionally be at least 5mm, optionally at least 10mm, optionally at least 15mm, optionally at least 20mm, optionally at least 25mm and optionally at least 30mm.

For a spectacle lens, the radial dimension of the distance vision lens portion may optionally be no more than 50mm, optionally no more than 45mm, optionally no more than 40mm, optionally no more than 35mm, optionally no more than 30mm, optionally no more than 25mm and optionally no more than 20mm.

The ophthalmic lens may comprise a first electrically-addressable lens portion and a second electrically-addressable lens portion. The first and second electrically-addressable lens portions may be individually electrically-addressable. The first and second electrically-addressable lens portions may together form an annulus. Each of the first and second electrically-addressable lens portions may be hemi-annular. The first electrically-addressable lens portion may be configured to be opposite the second electrically-addressable lens portion. For example, the first electrically-addressable lens portion may be configured to be, in use, a superior (upper) lens portion, and the second electrically-addressable lens portion may be configured to be, in use, an inferior (lower) lens portion. Alternatively, the first electrically-addressable lens portion may be configured to be, in use, a nasal lens portion, and the second electrically-addressable lens portion may be configure to be, in use, a temporal lens portion. The use of two such electrically-addressable lens portions facilitates greater control over the treatment of the wearer, for example, if the wearer has a condition that may be improved by asymmetric focussing of light. In this connection, if the lens is a contact lens, then the lens may be configured to adopt a desired orientation on the eye of a wearer. For example, a contact lens may include a stabilisation zone, such as a ballast. Optionally, a portion of the contact lens is heavier, for example, by virtue of the lens material being thicker. During use, the heavier portion of the contact lens will cause the lens to rotate so that the heavier portion is in a bottom position.

As mentioned above, the ophthalmic lens comprises a plurality of electrically-addressable lens portions. Each electrically-addressable lens portion may, for example, comprise an annular sector.

The lens may comprise first, second, third and fourth electrically-addressable lens portions. Each of the first second, third and fourth annular portions may comprise an annular sector, the annular sectors optionally forming an annulus. The annular portions may or may not be of the same size. The first electrically-addressable lens portion may be configured, in use, to be a superior, nasal portion. The second electrically-addressable lens portion may be configured, in use, to be an inferior, nasal portion. The third electrically-addressable lens portion may be configured, in use, to be an inferior, temporal portion. The fourth electrically-addressable lens portion may be configured, in use, to be a superior, temporal portion. The use of four such electrically-addressable lens portions facilitates greater control over the treatment of the wearer, for example, if the wearer has a condition that may be improved by asymmetric focussing of light. In this connection, if the ophthalmic lens is a contact lens, then the contact lens may be configured to adopt a desired orientation on the eye of a wearer, as described above.

The ophthalmic lens may comprise a first, annular electrically-addressable lens portion and a second, annular electrically-addressable lens portion. The first and second electrically-addressable lens portions may be concentric with one another and with the distance vision lens portion. The first and second electrically-addressable lens portions may optionally be individually electrically-addressable.

At least one, optionally more than one, and optionally each of the plurality of electrically-addressable lens portions may be operable to provide a change in optical power of at least ±0.5 diopters (D), optionally at least ±1.0D, optionally at least ±1.5D, optionally at least ±2.0D, optionally at least ±2.5D and optionally at least ±3.0D, optionally at least ±5.0D, optionally at least ±7.0D, optionally at least ±8.0D and optionally at least ±10.0D. At least one, optionally more than one, and optionally each of the plurality of electrically-addressable lens portions may be operable to provide a change in optical power of up to ±2.0D, optionally up to ±3.0D, optionally up to ±5.0D, optionally up to ±7.0D, optionally up to ±8.0D and optionally up to ±10.0D. The change in optical power achievable by each of a plurality of electrically-addressable lens portions may be the same or different.

As mentioned above, the plurality of electrically-addressable lens portions are addressable to focus light to a second location closer to the lens than the first location, which, in use, is in front of the retina of a wearer. It is thought that focussing light in front of the retina reduces the rate of elongation of the retina, and therefore reduces the associated development of myopia. At least one of the plurality of electrically-addressable lens portions, optionally more than one of the plurality of electrically-addressable lens portions and optionally each of the plurality of electrically-addressable lens portions may be addressable to focus light to the first location, thereby providing corrected distance vision (i.e. to have the required negative power to correct the myopic vision of the wearer). This corrected distance vision state may be attained in the absence of an electrical signal to the electrically-addressable lens portion i.e. in a zero power configuration. The benefit of such an arrangement is that in the event of a power failure, the ophthalmic lens defaults to a state that provides enhanced distance vision for the wearer. Alternatively, the ophthalmic lens may be configured so that in a zero power configuration (in the absence of an electrical signal to the electrically-addressable lens portion), at least one, optionally more than one and optionally each of the plurality of electrically-addressable lens portions is configured to focus light to a second location closer to the lens than the first location. The ophthalmic lens of the claimed subject-matter is configured so that, in the event of a power failure, at least one of the plurality of electrically-addressable lens portions is configured to focus light to the first location and therefore provide enhanced distance vision, and at least one of the plurality of electrically-addressable lens portions is configured to focus light to a second location closer to the lens than the first location.

At least one, optionally more than one, and optionally each of the plurality of electrically-addressable lens portions may therefore be operable between a first, distance vision operating state and a second, myopia control operating state. In the first, distance vision operating state, the respective electrically-addressable lens portion is configured to focus light to the first location, for example, onto a retina of a wearer. In the first, distance vision operating state, the respectively electrically-addressable lens portion may have a first optical power. In the second, myopia control operating state, the respective electrically-addressable lens portion is configured to focus light to a second location closer to the lens than the first location, typically, in use, in front of a retina of a wearer. In the second, myopia control operating state, the respectively electrically-addressable lens portion may have a second optical power. The first optical power of one electrically-addressable lens portion may or may not be the same as the first optical power of another electrically-addressable lens portion. Similarly, the second optical power of one electrically-addressable lens portion may or may not be the same as the second optical power of another electrically-addressable lens portion. If a lens comprises a plurality of electrically-addressable lens portions, then the first optical power of each of the electrically-addressable lens portions may be the same or different. If a lens comprises a plurality of electrically-addressable lens portions, then the second optical power of each of the electrically-addressable lens portions may be the same or different.

Optionally at least one, optionally more than one and optionally each of the plurality of electrically-addressable lens portions may be addressable to focus light into one of a plurality of different locations closer to the lens than the first location.

Optionally at least one, optionally more than one and optionally each of the plurality of electrically-addressable lens portions may be addressable to focus light to a third location, optionally further from the lens than the first and second locations. In use, the third location may be behind the retina.

Optionally at least one, optionally more than one and optionally each of the plurality of electrically-addressable lens portions may be user-controllable. For example, optionally at least one, optionally more than one and optionally each of the plurality of electrically-addressable lens portions may be configured to be controllable by a user. For example, optionally at least one, optionally more than one and optionally each of the plurality of electrically-addressable lens portions may be user-controllable to focus light to a second location closer to the lens than the first location (for example, in use, in front of the retina) and/or to focus light to the first location (for example, in use, onto the retina) and/or to focus light to the third location (for example, in use, behind the retina). For example, it may be desirable under certain environmental conditions (such as in low light) for at least one of the addressable lens portions to focus light to the first location, and it may be desirable for the user to be able to control this.

At least one of the plurality of electrically-addressable lens portions, optionally more than one of the plurality of electrically-addressable lens portions and optionally each of the plurality of electrically-addressable lens portions may comprise liquid crystal, such as a nematic liquid crystal.

At least one of the plurality of electrically-addressable lens portions, optionally more than one of the plurality of electrically-addressable lens portions and optionally each of the plurality of electrically-addressable lens portions may be provided by a liquid crystal cell, such as a nematic liquid crystal cell. A liquid crystal cell may be embedded within a lens material, such as a silicone hydrogel material in the case of a soft contact lens. At least one, optionally more than one and optionally each liquid crystal cell may be biconcave, biconvex or convex-concave in cross-section.

The liquid crystal cell may have a first state, in which the electrically-addressable lens portion comprising the liquid crystal cell is configured to focus light to a second location closer to the lens than the first location. The liquid crystal cell may be changed between the first state and a second state. In the second state, for example, the electrically-addressable lens portion comprising the liquid crystal cell may be configured to focus light to the first location. In the first and second states, the effective refractive index of the liquid crystal cell will be different, and can be selected such that in the first and second states, the optical power of the liquid crystal cell is different.

If at least one of the plurality of electrically-addressable-lens portions comprises a nematic liquid crystal, then the nematic liquid crystal may optionally be doped. The nematic liquid crystal may optionally be doped, for example, to increase birefringence and/or doped with a chiral dopant to induce chirality into the liquid crystal phase. Optionally, the nematic liquid crystal is not provided with a chiral dopant. Optionally, the liquid crystal is an achiral nematic liquid crystal. The liquid crystal may have a positive dielectric anisotropy or a negative dielectric anisotropy.

The liquid crystal may be disposed between two surfaces, at least one of which is provided by an alignment layer for aligning liquid crystal. The liquid crystal may be disposed between two alignment layers for aligning liquid crystal. An alignment layer may comprise a polymer. The polymer may optionally be an oriented polymer. The polymer may, for example, have been oriented by applying a force to the surface of the polymer, for example, by contacting the polymer with a roller or brush. At least one alignment layer may be configured to align the liquid crystal in one particular direction. At least one alignment layer may be configured to align the liquid crystal substantially parallel to the alignment layer. In this connection, it may not be desirable for the liquid crystal to be aligned perfectly parallel to the alignment layer. It may therefore be desirable to have a pre-tilt angle of from 0.5 to 10 degrees, optionally of from 1 to 5 degrees, for example. Pre-tilt is typically measured using the crystal rotation method, as is well-known to those skilled in the art of liquid crystals. At least one alignment layer may be configured to align the liquid crystal in a homeotropic configuration (i.e., substantially normal to the alignment surface). At least one alignment layer may be configured to align the liquid crystal in a homeotropic configuration when the liquid crystal is in one of a switched and an unswitched state, and to align the liquid crystal in a preferred planar configuration when the liquid crystal is in the other of the switched and unswitched states. For example, one alignment layer may be configured to align the liquid crystal in a homeotropic state when the liquid crystal is in an unswitched state, and another alignment layer is configured to align the liquid crystal in a preferred direction in a planar state when the liquid crystal is in a switched state. This encourages the liquid crystal to align in a particular direction within a plane when the liquid crystal is in a planar state.

The magnitude of birefringence of the liquid crystal at the operating temperature of the lens is optionally at least 0.10, optionally at least 0.15, optionally at least 0.175 and optionally at least 0.20. The operating temperature of the lens at which said birefringence may be determined may be, for example, 20-25°C for a spectacle lens and 30-35°C for a contact lens. Birefringence, Δn=nₑ-nₒ, is typically assessed at 632.8nm using a He-Ne laser. Those skilled in the art will realise that the lens will still be effective outside of these operating temperatures, but these operating temperatures are merely noted as being typically operating temperatures at which the birefringence may be determined.

The mean thickness of the liquid crystal is optionally at least 5µm, optionally at least 10µm, optionally at least 15µm, optionally at least 20µm, optionally at least 25µm and optionally at least 30µm. The mean thickness of the liquid crystal is optionally no more than 50µm, optionally no more than 45µm, optionally no more than 40µm, optionally no more than 35µm, optionally no more than 30µm, optionally no more than 25µm and optionally no more than 20µm.

At least one, optionally more than one, and optionally each of the plurality of electrically-addressable lens portions may comprise a space for the receipt of fluid and a fluid located in said space. Optionally, the refractive effect of the electrically-addressable lens portion depends on the shape of the fluid through which light passes and the refractive index of the fluid compared to the surrounding medium. In this connection, the shape of the fluid in said space, and the refractive index of the fluid compared to the surrounding medium may determine the refractive properties of the electrically-addressable lens portion. The lens may be operable to introduce fluid into, and/or remove fluid from, the space. Introduction and/or removal of fluid may increase or decrease the thickness of the fluid in the space, and/or may change the shape of the electrically-addressable lens portion. Introduction and/or removal of fluid may change the shape of an interface between the fluid and a surrounding medium. The change in shape of the interface may change the optical power of the electrically-addressable lens portion. The surrounding medium may, for example, comprise a contact lens material, such as a polymer used to make contact lenses, such as silicone hydrogel. For example, introducing fluid into the space may provide an interface between the fluid and the surrounding medium that is more curved. Alternatively or additionally, at least one, optionally more than one and optionally each of the plurality of electrically-addressable lens portions may be electrically-addressable between a first state in which the respective electrically-addressable lens portion has a first refractive shape and a second state in which the respective electrically-addressable lens portion has a second refractive shape different from the first refractive shape, movement of fluid into and/or out of said space providing operation between the first and second states. A pump may be provided for introducing refractive medium into, and removing refractive medium from, the space.

At least one, optionally more than one, and optionally each of the plurality of electrically-addressable lens portions may comprise a refractive element configured to have a shape dependent on the electrical signal applied to the respective electrically-addressable lens portion. At least one, optionally more than one, and optionally each refractive element may comprise a first liquid, the shape of the first liquid being dependent on the electrical signal applied to the respective electrically-addressable lens portion. At least one, optionally more than one, and optionally each of the plurality of electrically-addressable lens portions may comprise a second liquid immiscible with the first liquid. The first liquid may have an interface with the second liquid, the shape of the interface between the first and second liquids being dependent on the electrical signal applied to the respective electrically-addressable lens portion. At least one, optionally more than one, and optionally each of the plurality of electrically-addressable lens portions may comprise an electrowetting lens, for example, as disclosed in: www.corning.com/worldwide/en/products/advanced-optics/product-materials/corning-varioptic-lenses/varioptic-technology.html.

The distance vision lens portion may have a negative optical power, optionally of from - 0.25D to -15D, and optionally of from -0.25D to -10D. The distance vision lens portion optionally has a fixed optical power, when the lens is on the eye of a wearer. Optionally, the optical power of the distance vision lens portion may be varied. For example, the distance vision lens portion may be operable between a first configuration in which the distance vision lens portion is configured to correct myopia and a second, different, configuration. The distance vision lens portion may be electrically-addressable between the first and second configurations. The distance vision lens portion may, for example, comprise a liquid crystal cell that is operable, optionally electrically-addressable, between a first configuration for the correction of myopia and a second, different configuration.

The ophthalmic lens may be a contact lens, for example, a hard contact lens or a soft contact lens. A soft contact lens may comprise any suitable material, such as a silicone hydrogel material (often known as SiHy). At least one, optionally more than one and optionally each of the plurality of electrically-addressable lens portions may be embedded in the lens material.

The contact lens may be configured to adopt a desired orientation on the eye of a wearer. For example, the contact lens may be ballasted. Optionally, a portion of the contact lens is heavier, for example, by virtue of the lens material being thicker. During use, the heavier portion of the contact lens will cause the lens to rotate so that the heavier portion is in a bottom position.

The ophthalmic lens may be a lens for spectacles.

The ophthalmic lens may comprise a lens control module for controlling operation of the at least one electrically-addressable lens portions. The ophthalmic lens may comprise a receiver for receiving instructing signals from a remote transmitter. The receiver may be in communication with the lens control module. The ophthalmic lens may be provided with a power source for providing power for operation of the electrically-addressable lens portion(s). If the ophthalmic lens is a spectacle lens, and the spectacle lens is incorporated into a pair of spectacles, then the pair of spectacles may be provided with said power source. The pair of spectacles may be provided with a receiver for receiving instructions from a remote transmitter.

In accordance with a second aspect of the present invention there may be provided a system for controlling myopic progression comprising an ophthalmic lens in accordance with the first aspect of the present invention, and a user control module for controlling the operation of the ophthalmic lens. The user control module may comprise a user interface for displaying information regarding the operation of the lens and for controlling the operation of the ophthalmic lens. The user control module may be provided on an electronic device, such as a mobile phone, tablet or other computing device. The user control module may be incorporated into a device, such as a mobile phone. The user control module may be configured to, communicate with, and optionally control, a transmitter for transmitting signals to the receiver associated with the ophthalmic lens. Alternatively, the user control module may be a component of a spectacle frame. In one example, the user control module may be included within an ear piece of the spectacle frame and include a switch to provide a signal from the transmitter to the receiver. The user control module may comprise a user-actuatable switch for controlling the operation of the ophthalmic lens. For example, a spectacle frame may comprise such a switch. A contact lens may be provided with such a switch. The switch may be operable in response to a physiological movement, such as blinking, a pre-defined movement of the eyeball, a frown or brow contraction.

In accordance with a third aspect of the present invention, there is provided spectacles comprising at least one, and optionally two, ophthalmic lenses in accordance with the first aspect of the present invention.

In accordance with a merely illustrative embodiment not covered by the claimed subject-matter, there is provided a method of controlling myopic progression, the method comprising providing a wearer suffering from myopia or at risk of developing myopia with an ophthalmic lens comprising at least one electrically-addressable lens portion addressable to focus light to a second location.

The second location may, in use, be in front of the retina of the wearer. Reference to "a second location" is made to correspond to the second location referred to above in relation to the lens of the first aspect of the present invention.

Addressing one or more of the electrically-addressable lens portions may comprise applying an electrical signal to one or more of the electrically-addressable lens portions, typically by applying an electrical voltage or field across the liquid crystal of the one or more of the electrically-addressable lens portions in order to change an optical property (such as the optical power) of the one or more electrically-addressable lens portions.

The method may comprise causing at least one electrically-addressable lens portion (and optionally more than one electrically-addressable lens portion and optionally each electrically-addressable lens portion) to change its focal point or optical power. The method may comprise causing at least one electrically-addressable lens portion (and optionally more than one electrically-addressable lens portion and optionally each electrically-addressable lens portion) to focus light to a second location. In use, this may be in front of the retina of the wearer. The method may comprise causing at least one electrically-addressable lens portion (and optionally more than one electrically-addressable lens portion and optionally each electrically-addressable lens portion) to focus light to a first location, the second location being closer to the lens than the first location. The first location may, in use, be on to the retina of the wearer. The method may comprise causing at least one electrically-addressable lens portion (and optionally more than one electrically-addressable lens portion and optionally each electrically-addressable lens portion) to focus light to a third location further from the lens than both the first and second locations. In use, the third location may be behind the retina of the wearer.

Optionally, the method may comprise causing at least one electrically-addressable lens portion (and optionally more than one electrically-addressable lens portion) to focus light to a second location closer to the lens than the first location, and causing at least one electrically-addressable lens portion (and optionally more than one electrically-addressable lens portion) to focus light to the first location.

The method may comprise providing an ophthalmic lens in accordance with the first aspect of the present invention. The ophthalmic lens may have one or more of the features of the lens of the first aspect of the present invention. For example, the ophthalmic lens may comprise a distance vision lens portion for correcting myopia. The distance vision lens portion may have an optical power of -0.25D to -10D.

The method may comprise placing an ophthalmic lens onto an eyeball of the wearer, optionally placing a first ophthalmic lens onto a first eyeball of the wearer and a second ophthalmic lens onto a second eyeball of the wearer. The method may comprise placing an ophthalmic lens in spaced relationship with an eyeball of the wearer. The method may comprise placing a first ophthalmic lens in spaced relationship with a first eyeball of the wearer and a second ophthalmic lens in spaced relationship with a second eyeball of the wearer.

In a first operating state, optionally a zero power operating state, at least one of the electrically-addressable lens portions may focus light to the first location. In a second operating state, optionally an electrically-powered operating state, at least one of the electrically-addressable lens portions may focus light to a second location closer to the lens than the first location. At least one of the electrically-addressable lens portions may be operable between the first and second operating states. Alternatively, in a first operating state, optionally a zero power operating state, at least one of the electrically-addressable lens portions may focus light to a second location closer to the lens than the first location. In a second operating state, optionally an electrically-powered operating state, at least one of the electrically-addressable lens portions may focus light to the first location.

The method may comprise changing between the first and second operating states in response to a wearer input. For example, a wearer may decide that it would be desirable for at least one electrically-addressable lens portion to focus light on to a retina to provide enhanced distance vision. The method may comprise changing between the first and second operating states in response to one of more environmental inputs. For example, an environmental input may a light level (such an ambient light level) or a time of day. For example, if an ambient light level were to fall below a pre-determined level, then an addressable lens portion may change from a second to a first operating state.

The method may comprise executing a treatment regime in the form of a set of instructions, thereby addressing one or more of the electrically-addressable lens portions. The treatment regime may be determined by an eye care practitioner. The treatment regime may be determined with or without reference to one or more ocular characteristic of the wearer, such as the wearer's peripheral refractive error. The treatment regime may optionally be reviewed periodically, for example, on a regular basis. For example, the treatment regime may be reviewed after at least one month's treatment, optionally after at least six months' treatment or optionally after at least twelve months' treatment.

The treatment regime may be determined by reference to at least one environmental factor, such as light levels and main intended location for use (such as indoors or outdoors). For example, in the event that it is indicated that a wearer would predominantly be wearing the lens outdoors, then the amount of time in which one or more of the one electrically-addressable lens portions is configured to focus light to a second location closer to the lens than the first location, optionally in front of the retina, may be less than if it is indicated that a wearer would predominantly be wearing the lens indoors.

The method may comprise causing at least one electrically-addressable lens portion (and optionally more than one electrically-addressable lens portion and optionally each electrically-addressable lens portion) to focus light to a second location closer to the lens than the first location for at least 1 hour/day, optionally at least 2 hours/day, optionally at least 3 hours/day, optionally at least 4 hours/day and optionally at least 5 hours/day. The method may comprise causing at least one electrically-addressable lens portion (and optionally more than one electrically-addressable lens portion and optionally each electrically-addressable lens portion) to focus light to a second location closer to the lens than the first location for no more than 16 hours/day, optionally no more than 12 hours/day, optionally no more than 10 hours/day, optionally no more than 8 hours/day and optionally no more than 6 hours/day.

Such daily treatment is optionally broken-up into one or more periods (optionally referred to as "treatment periods") in which one or more (and optionally more than one and optionally each) of the electrically-addressable lens portions is caused to focus light to a second location closer to the lens than the first location, and one or more periods (optionally referred to as "rest periods") in which one or more (and optionally more than one and optionally each) of the electrically-addressable lens portions is caused to focus light to the first location. A treatment period is optionally immediately followed by a rest period. A rest period may optionally be immediately followed by a treatment period.

At least one, optionally more than one and optionally each treatment period may optionally be at least 15 minutes, optionally at least 30 minutes, optionally at least 45 minutes, optionally at least 60 minutes, optionally at least 90 minutes, optionally at least 120 minutes, optionally at least 240 minutes, optionally at least 300 minutes. At least one, optionally more than one and optionally each treatment period may be no more than 720 minutes, optionally no more than 600 minutes, optionally no more than 480 minutes, optionally no more than 360 minutes and optionally no more than 240 minutes. At least one, optionally more than one and optionally each treatment period may be from 15 to 600 minutes, optionally from 30 to 480 minutes, optionally from 45 to 360 minutes, optionally from 60 to 240 minutes and optionally 120 to 240 minutes. The treatment periods may be the same as each other. The treatment periods may be different from one another.

At least one, optionally more than one and optionally each rest period may optionally be at least 15 minutes, optionally at least 30 minutes, optionally at least 45 minutes, optionally at least 60 minutes, optionally at least 90 minutes, optionally at least 120 minutes, optionally at least 240 minutes, optionally at least 300 minutes. At least one, optionally more than one and optionally each rest period may be no more than 720 minutes, optionally no more than 600 minutes, optionally no more than 480 minutes, optionally no more than 360 minutes and optionally no more than 240 minutes. At least one, optionally more than one and optionally each rest period may be from 15 to 600 minutes, optionally from 30 to 480 minutes, optionally from 45 to 360 minutes, optionally from 60 to 240 minutes and optionally 120 to 240 minutes. The rest periods may be the same as each other. The rest periods may be different from one another

The method may comprise causing at least one electrically-addressable lens portion (and optionally more than one electrically-addressable lens portion and optionally each electrically-addressable lens portion) to focus light to a second location closer to the lens than the first location for a first period of optionally at least 15 minutes, optionally at least 30 minutes, optionally at least 45 minutes, optionally at least 60 minutes, optionally at least 90 minutes, optionally at least 120 minutes, optionally at least 240 minutes, optionally at least 300 minutes. Said first period may be no more than 720 minutes, optionally no more than 600 minutes, optionally no more than 480 minutes, optionally no more than 360 minutes and optionally no more than 240 minutes. The first period may be from 15 to 600 minutes, optionally from 30 to 480 minutes, optionally from 45 to 360 minutes, optionally from 60 to 240 minutes and optionally 120 to 240 minutes.

The method may comprise causing at least one electrically-addressable lens portion (and optionally more than one electrically-addressable lens portion and optionally each electrically-addressable lens portion) to focus light to the first location for a second period of optionally at least 15 minutes, optionally at least 30 minutes, optionally at least 45 minutes, optionally at least 60 minutes, optionally at least 90 minutes, optionally at least 120 minutes, optionally at least 240 minutes, optionally at least 300 minutes. Said second period may be no more than 720 minutes, optionally no more than 600 minutes, optionally no more than 480 minutes, optionally no more than 360 minutes and optionally no more than 240 minutes. The second period may be from 15 to 600minutes, optionally from 30 to 480minutes, optionally from 45 to 360 minutes, optionally from 60 to 240 minutes and optionally 120 to 240 minutes.

The method may comprise, after the second period, causing at least one electrically-addressable lens portion (and optionally more than one electrically-addressable lens portion and optionally each electrically-addressable lens portion) to focus light to a second location closer to the lens than the first location for a third period. The third period may have the features described above in relation to the first period. For the avoidance of doubt, the third period need not be the same as the first period.

The method may comprise, after the third period, causing at least one electrically-addressable lens portion (and optionally more than one electrically-addressable lens portion and optionally each electrically-addressable lens portion) to focus light to the first location for a fourth period. The fourth period may have the features described above in relation to the second period. For the avoidance of doubt, the fourth period need not be the same as the second period.

The method may comprise periodically detecting whether or not at least one of the electrically-addressable lens portions is in the second operating state, and if not in the second operating state, addressing at least one electrically-addressable lens portion so that it is in the second operating state. For example, the method may comprise every one to three hours detecting whether or not at least one of the electrically-addressable lens portions is in the second operating state, and if not in the second operating state, addressing at least one electrically-addressable lens portion so that it is in the second operating state. Alternatively, the method may comprise, at a certain time and/or date (for example, at a certain time each day), detecting whether or not at least one of the electrically-addressable lens portions is in the second operating state, and if not in the second operating state, addressing at least one electrically-addressable lens portion so that it is in the second operating state.

At least one of the electrically-addressable lens portions may be provided by a liquid crystal cell. The orientation of the liquid crystal molecules may change between the first and second operating states. The ophthalmic lens may comprise a plurality of electrically-addressable lens portions. Optionally, more than one and optionally each of the electrically-addressable lens portions is independently operable.

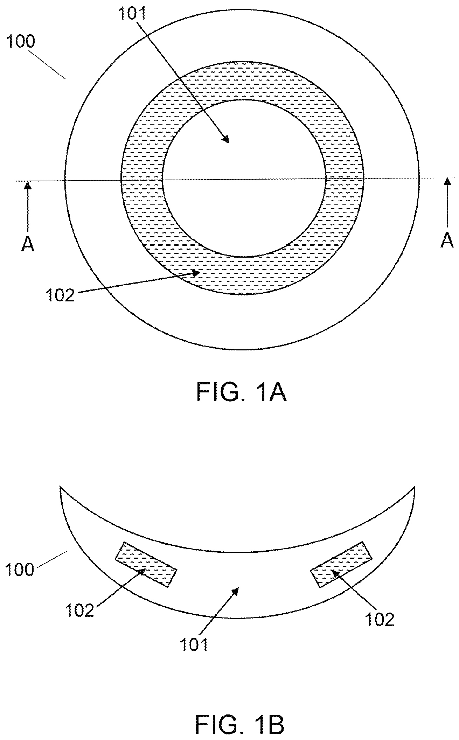

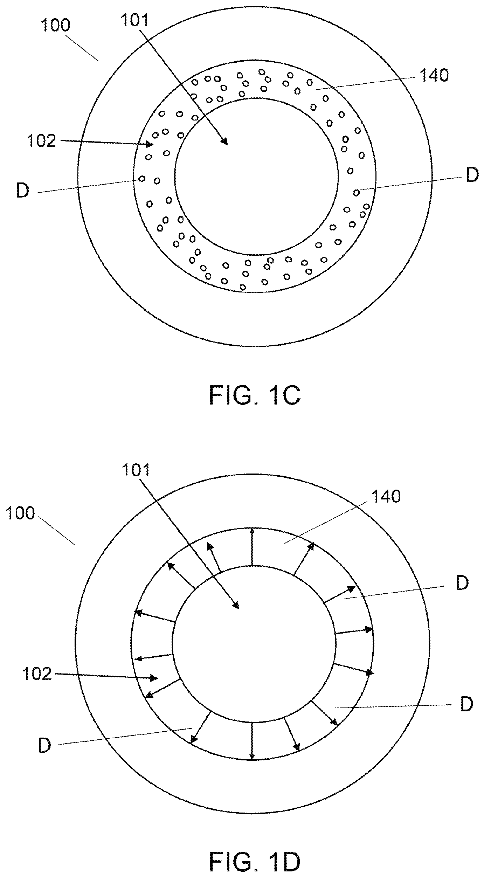

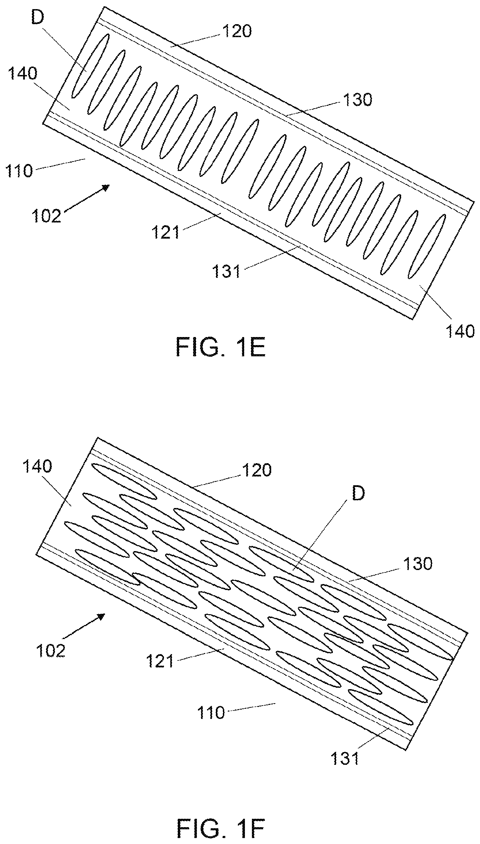

The invention will now be described by way of example only. FIGS. 1A, 1B, 1C, 1D, 1E and 1F show an ophthalmic lens not covered by the claimed subject-matter for controlling myopic progression, the ophthalmic lens being denoted generally by reference numeral 100. The lens 100 is a soft contact lens made from a high refractive index acrylamide polymer material as disclosed in WO2003/10267, having a refractive index of about 1.50, although the contact lens may be made from other materials. The lens 100 comprises a distance vision lens portion 101 for correcting myopia. The distance vision lens portion 101 focuses light to a first location. The distance vision lens portion 101 is in the centre of the lens 100, and is formed from high refractive index acrylamide polymer material. The distance vision lens portion 101 may have an optical power of from -0.25D to -10D. The lens 100 comprises an electrically-addressable lens portion 102 addressable to focus light to a second location, closer to the lens 100 than the first location. The second location is typically in front of the retina of a wearer.

The lens 100 comprises a liquid crystal cell 110 (see FIG. 1E, for example) that provides the electrically-addressable lens portion 102. The liquid crystal cell 110 and the electrically-addressable lens portion 102 are substantially annular in shape. The liquid crystal cell 110 comprises electrically-conductive and optically-transparent substrates 120, 121. Each of the substrates 120, 121 comprises an optically-transparent plastic support (not shown) on which has been deposited a layer (not shown) of optically-transparent, electrically-conductive material, in this case indium-tin oxide (often known as ITO). Other optically-transparent, electrically-conductive materials may be used. Alignment layers 130, 131 for the alignment of liquid crystal 140 are provided on each of the substrates 120, 121. Alignment layer 130 (SE-1211 polymer, Nissan Chemical Industries Ltd., Japan) promotes homeotropic alignment of the liquid crystal in the unswitched state. In homeotropic alignment, the director of the liquid crystal is normal or approximately normal to the plane of the substrates 120, 121. Alignment layer 131 comprises a 1:10 mixture of a polymer that promotes homeotropic alignment in the unswitched state (SE-1211) and a polymer that promotes alignment in a planar state (SE-3510, Nissan Chemical Industries Ltd.). Alignment layer 131 is formed by depositing the mixture of SE-1211 and SE-3510 onto substrate 121, heating the substrate and then rubbing the alignment layer 131. This rubbing of the alignment layer confers a preferred orientation of the liquid crystal when the liquid crystal is in a planar state (the director being parallel to the substrates 120, 121) as shown in FIG. 1F. Liquid crystal 140 is provided between the alignment layers 130, 131. The thickness of the liquid crystal 140 is about 30µm. The liquid crystal is MLC-2081 (Merck). While the liquid crystal cell is shown as rectilinear in cross-section in FIGS. 1B, 1E and 1F, the liquid crystal cell is biconcave in shape.

When the electrically-addressable lens portion 102 is in an unswitched state, the liquid crystal molecules in the liquid crystal cell 110 are in a homeotropic alignment, as shown in FIG. 1E. In this alignment, the effective refractive index of the liquid crystal 140 and of the electrically-addressable lens portion is nₒ, in this case, about 1.50. This is matched to the refractive index of the surrounding lens material. In this configuration, the electrically-addressable lens portion 102 acts to focus light passing through the electrically-addressable lens portion to a second location, in front of the retina of the wearer, and closer to the lens than the first location. When a sufficiently high voltage is applied to the liquid crystal cell 110, the orientation of the liquid crystal molecules is changed. In this connection, when a sufficiently high voltage is applied to the liquid crystal cell 110, the orientation of the liquid crystal molecules changes from a homeotropic orientation (as shown in FIG. 1E) to a planar orientation (as shown in FIG. 1F). It should be noted that MLC-2081 has a negative dielectric anisotropy, and will therefore switch from a homeotropic orientation to a planar orientation when a sufficiently high voltage is applied. When the liquid crystal has been switched into the planar orientation, the director of the liquid crystal is shown in FIGS. 1D and 1F. Alignment layer 131 has been rubbed in a radial direction to confer a preferred alignment on the liquid crystal 140 when the liquid crystal is in a switched, planar state. Given that nₑ is about 1.72 for MLC-2081, when the liquid crystal 140 is in the planar alignment configuration, the effective refractive index of the liquid crystal 140 is greater than nₒ, and therefore greater than the refractive index of the surrounding lens material. In this case, due to the refractive index of the liquid crystal cell being greater than that of the surrounding lens material and due to the biconcave geometry of the liquid crystal cell, the liquid crystal cell will provide a more negative optical power than when the liquid crystal is in the unswitched state. This causes light passing through the liquid crystal 140 to be focussed to a first location, on to the retina. Studies have shown that focussing of the light in front of the retina is an effective way of moderating the progression of myopia.

The arrangement of the director D of the liquid crystal 140 in the switched state is shown in FIG. 1D and is polarisation-independent in so far as this arrangement is effective for all polarisations of light.

Changing from the unswitched state to the switched state may be performed automatically. For example, the lens 100 may be configured to switch from the unswitched state to the switched state after a pre-determined period of wear (e.g. an hour). Alternatively or additionally, the lens 100 may be configured to change from the switched to the unswitched state periodically (for example, for a fixed duration of time (e.g. 5 minutes) every allotted period of time (e.g. every hour). Alternatively or additionally, the lens 100 may be configured to change from the switched to the unswitched state at a certain time of day, or in response to certain environmental conditions. For example, the lens 100 may be configured to change from the unswitched to the switched state in the event that the ambient light level is low (there being a greater need for the electrically-addressable lens portion 102 to focus light onto a retina of the wearer to improve distance vision). Conversely, the lens 100 may be configured to change from the switched to the unswitched state in response to certain environmental conditions. For example, the lens 100 may be configured so that it changes from the switched to unswitched state in the event that an ambient light level rises above a predetermined level. In this connection, distance vision may become easier at high light levels and more difficult at low light levels; it may be beneficial for the electrically-addressable lens portion to focus light onto the retina of a wearer in low ambient light conditions.

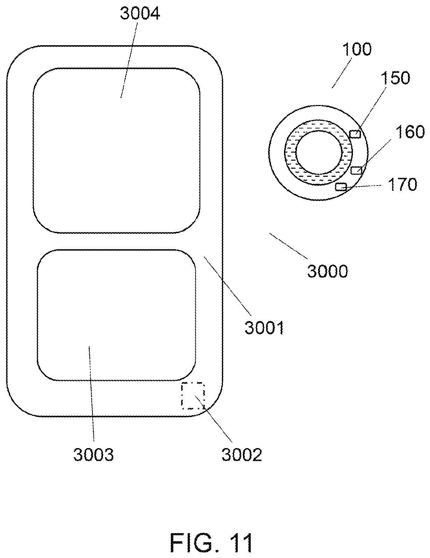

Operation of lens 100 will now be described with reference to FIG. 11, which shows an example of a system for controlling myopia in accordance with an embodiment of the present invention. The system is denoted generally by reference numeral 3000 and comprises lens 100 as described above and a lens control module 3002. Lens 100 may be operated automatically. In this connection, lens 100 is provided with a control module 150 for controlling the operation of the electrically-addressable portion 102 (not shown). A power module 160 is provided for providing power to the control module 150. The control module 150 is provided with instructions for controlling the operation of the electrically-addressable portion 102, and the lens 100 may operate automatically without further input from a wearer.

Additionally or alternatively, the lens 100 may be operated based on wearer input. In this connection, the lens 100 is provided with an antenna 170 for receiving control instructions for operation of the electrically-addressable portion 102 from a wearer. The antenna 170 may be any suitable receiving antenna, such as a wi-fi antenna or a Bluetooth^{®} antenna. A wearer may be provided with a lens control module 3002 provided by a suitably-programmed mobile phone 3001.The lens control module 3002 may comprise a display module 3004 for indicating the status of lens 100, and a user input module 3003 for making inputs for controlling lens 100. The wearer may control the lens 100 using the lens control module 3002. For example, the wearer may decide that they want to improve their distance vision by focussing light from the electrically-addressable lens portion 102. The wearer may determine the status of lens 100 via display module 3004. For example, the status of the lens 100 may be displayed as "Treatment mode" if the electronically-addressable lens portion 102 is configured to focus light in front of the retina (i.e. on to the second location) or "Distance vision mode" if the electronically-addressable lens portion 102 is configured to focus onto the retina (i.e. on to the first location).

If the lens 100 were in the unswitched state as shown in FIGS. 1D and 1F, the wearer would make inputs via the user input module 3003. Signals would be processed by lens control module 3002 and sent from the mobile phone 3001 to lens 100, being received by antenna 170. The lens 100 would then be switched from the unswitched to the switched state.

The contact lens 100 as described in relation to FIGS. 1A, 1B, 1C, 1D, 1E and 1F may be made as follows. A two-part inert insert (not shown) is provided. The insert comprises an anterior portion and posterior portion, both of which are made from an acrylamide elastomer (although other materials may be used). When the anterior and posterior parts of the insert are placed together, there is a cavity between the anterior and posterior parts, the cavity being for the accommodation of the liquid crystal cell. This cavity is formed by providing a recess in one or both of the anterior and posterior parts of the insert; in this connection, a recess may be formed in the posterior portion of the anterior part, and/or a recess may be formed in the anterior portion of the posterior part. The recess is typically formed by molding. Electrically-conductive and optically-transparent substrates 120, 121 are formed on each of the anterior and posterior parts, for example, by deposition of indium tin oxide. Alignment layers 130, 131 may then be deposited onto the substrates 120, 121. In this case, alignment layer 130 (SE-1211 polymer, Nissan Chemical Industries Ltd., Japan) promotes homeotropic alignment of the liquid crystal in the unswitched state. Alignment layer 131 comprises a 1:10 mixture of a polymer that promotes homeotropic alignment in the unswitched state (SE-1211) and a polymer that promotes alignment in a planar state (SE-3510, Nissan Chemical Industries Ltd.). Alignment layer 131 is formed by depositing the mixture of SE-1211 and SE-3510 onto substrate 121, heating the substrate and then rubbing the alignment layer 131. This rubbing of the alignment layer confers a preferred orientation of the liquid crystal when the liquid crystal is in a planar state (the director being parallel to the substrates 120, 121) as shown in FIG. 1F. Liquid crystal 140 is provided between the alignment layers 130, 131. Liquid crystal 140 is then deposited between the alignment layers 130, 131. The anterior and posterior parts of the insert are then bonded together, for example, using plasma bonding. Electrical contacts are provided from the substrate 120, 121 out of the insert for connection to a power source. The insert is then incorporated into a soft contact lens. A separate cavity may be provided for the receiver antenna, power source and any associated signal and power processing electronics. A conductive material, typically in the form of a thin layer, is provided to electrically connect the liquid crystal cell to the power source and processing electronics.

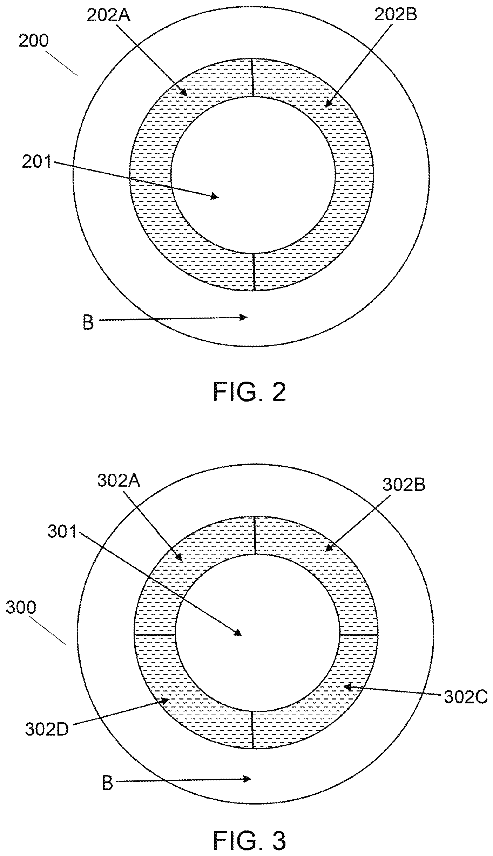

A further example of an ophthalmic lens in accordance with an embodiment of the present invention will now be described with reference to FIG. 2. FIG. 2 shows an ophthalmic lens for controlling myopic progression, the lens being denoted generally by reference numeral 200. The lens 200 is a soft contact lens made from a high refractive index acrylamide, although the contact lens may be made from other materials. The lens 200 comprises a distance vision lens portion 201 for correcting myopia. The distance vision lens portion 201 is in the centre of the lens 200, and is formed from a high refractive index acrylamide. The distance vision lens portion 201 may have an optical power of from -0.25D to -10D and focuses light to a first location (typically onto the retina of a wearer). The lens 200 comprises two electrically-addressable lens portions 202A, 202B addressable to focus light to a second location, typically in front of the retina of a wearer. Each electrically-addressable lens portion 202A, 202B is hemi-annular and is controllable independently of the other. The second location to which light is focussed need not be the same for the two electrically-addressable lens portions 202A, 202B, but may be the same. Lens 200 is weighted by virtue of the thickness of the lens 200 in region B being greater than in the rest of the lens. This region B may be understood to be a ballast. This ensures that lens 200 always has the same orientation on the eye of a wearer, with the region B of lens 200 being in a lowermost position or inferior position. Electrically-addressable lens portions 202A, 202B are nasal and temporal portions, and are formed from liquid crystal cells substantially as described above in relation to the lens 100 of FIGS. 1A, 1B, 1C, 1D, 1E and 1F. The electrically-addressable portions may be operated essentially as described above in relation to the lens 100 of FIGS. 1A, 1B, 1C, 1D, 1E and 1F. The advantage of lens 200 is that electrically-addressable lens portions 202A, 202B may be operated independently of one another, and may be operated independently to take into account any asymmetry in the vision or eye anatomy of the wearer. The optical powers of the electrically-addressable lens portions 202A, 202B in the switched state may be different from one another, and in the unswitched state may be different from one another. This may be achieved, for example, by using different liquid crystal materials and/or using different thicknesses of liquid crystal.

A further example of an ophthalmic lens in accordance with an embodiment of the present invention will now be described with reference to FIG. 3. FIG. 3 shows an ophthalmic lens for controlling myopic progression, the lens being denoted generally by reference numeral 300. The lens 300 is a soft contact lens made from a high refractive index acrylamide material, although the contact lens may be made from other materials. The lens 300 comprises a distance vision lens portion 301 for correcting myopia. The distance vision lens portion 301 is in the centre of the lens 300, and is formed from a high refractive index acrylamide material. The distance vision lens portion 301 may have an optical power of from -0.25D to -10D, and focuses light to a first location (typically onto the retina of a wearer). The lens 300 comprises four electrically-addressable lens portions 302A, 302B, 302C, 302D addressable to focus light to a second location, typically in front of the retina of a wearer. The second location to which light is focussed need not be the same for the four electrically-addressable lens portions 302A, 302B, 302C, 302D but may be the same. Each electrically-addressable lens portion 302A, 302B, 302C, 302D is quarter-annular and is controllable independently of the other. Lens 300 is weighted by virtue of the thickness of the lens 300 in region B being greater than in the rest of the lens. Region B may be understood to be a ballast. This ensures that lens 300 always has the same orientation on the eye of a wearer, with the region B of lens 300 being in a lowermost position. Electrically-addressable lens portions 302A, 302B, 302C, 302D are then superior or inferior, and nasal or temporal portions, and are formed from liquid crystal cells substantially as described above in relation to the lens 100 of FIGS. 1A, 1B, 1C, 1D, 1E and 1F. The electrically-addressable portions may be operated essentially as described above in relation to the lens 100 of FIGS. 1A, 1B, 1C, 1D, 1E and 1F. The advantage of lens 300 is that electrically-addressable lens portions 302A, 302B, 302C, 302D may be operated independently of one another, and may be operated independently to take into account any asymmetry in the vision or eye anatomy of the wearer. The optical powers of the electrically-addressable lens portions 302A, 302B, 302C, 302D in the switched state may be different from one another, and in the unswitched state may be different from one another. This may be achieved, for example, by using different liquid crystal materials and/or using different thicknesses of liquid crystal.

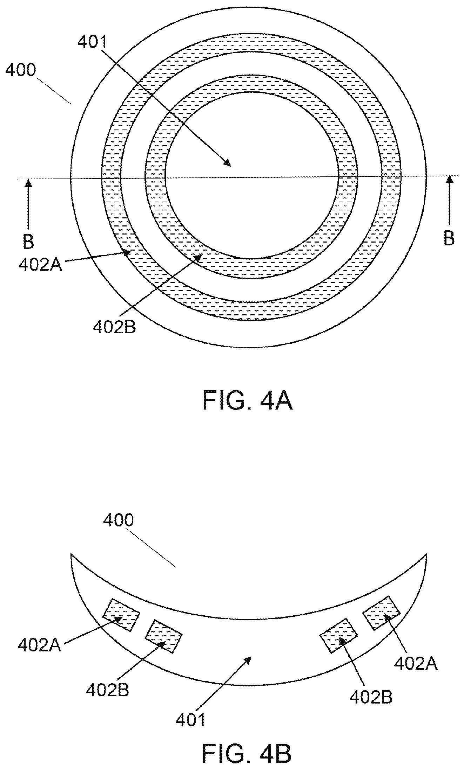

A further example of an ophthalmic lens in accordance with an embodiment of the present invention will now be described with reference to FIG. 4A and FIG. 4B. FIG. 4A and FIG. 4B show an ophthalmic lens for controlling myopic progression, the lens being denoted generally by reference numeral 400. The lens 400 is a soft contact lens made from a high refractive index acrylamide material, although the contact lens may be made from other materials. The lens 400 comprises a distance vision lens portion 401 for correcting myopia, and focuses light to a first location (typically onto the retina of a wearer). The distance vision lens portion 401 is in the centre of the lens 400, and is formed from a high refractive index acrylamide material. The distance vision lens portion 401 may have an optical power of from -0.25D to -10D. The lens 400 comprises two electrically-addressable lens portions 402A, 402B addressable to focus light to a second location, typically in front of the retina of a wearer. The second location to which light is focussed need not be the same for the two electrically-addressable lens portions 402A, 402B but may be the same. Each electrically-addressable lens portion 402A, 402B is annular and is controllable independently of the other. Electrically-addressable lens portions 402A, 402B are formed from liquid crystal cells substantially as described above in relation to the lens 100 of FIGS. 1A, 1B, 1C, 1D, 1E and 1F. The electrically-addressable portions may be operated essentially as described above in relation to the lens 100 of FIGS. 1A, 1B, 1C, 1D, 1E and 1F. Electrically-addressable lens portions 402A, 402B may have the same optical power, or different optical powers. The advantage of lens 400 is that electrically-addressable lens portions 402A, 402B may be operated independently of one another, providing greater adaptability as to the amount of light that may be focussed onto the retina of a wearer and the amount of light that may be focussed in front of the retina of a wearer. Such an arrangement also provides greater adaptability in relation to the treatment options that may be provided to a wearer susceptible to myopic progression. The optical powers of the electrically-addressable lens portions 402A, 402B in the switched state may be different from one another, and in the unswitched state may be different from one another. This may be achieved, for example, by using different liquid crystal materials and/or using different thicknesses of liquid crystal.

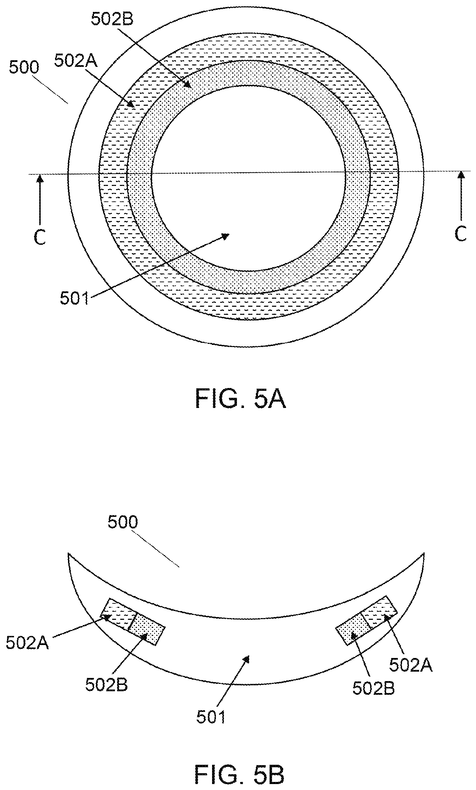

Yet another example of an ophthalmic lens in accordance with an embodiment of the present invention will now be described with reference to FIG. 5A and FIG. 5B. FIG. 5A and FIG. 5B show an ophthalmic lens for controlling myopic progression, the lens being denoted generally by reference numeral 500. The lens 500 is a soft contact lens made from a high refractive index acrylamide material, although the contact lens may be made from other materials. The lens 500 comprises a distance vision lens portion 501 for correcting myopia, and focuses light to a first location (typically onto the retina of a wearer). The distance vision lens portion 501 is in the centre of the lens 500, and is formed from a high refractive index acrylamide material. The distance vision lens portion 501 may have an optical power of from -0.25D to -10D. The lens 500 comprises two electrically-addressable lens portions 502A, 502B addressable to focus light to a second location, typically in front of the retina of a wearer. The second location to which light is focussed need not be the same for the two electrically-addressable lens portions 502A, 502B but may be the same. Each electrically-addressable lens portion 502A, 502B is annular and is controllable independently of the other. Electrically-addressable lens portion 502B has a different optical power to electrically-addressable lens portion 502A, and the electro-optic response of electrically-addressable lens portion 502B is different from that of electrically-addressable lens portion 502A. Electrically-addressable lens portions 502A, 502B are formed from liquid crystal cells substantially as described above in relation to the lens 100 of FIGS. 1A, 1B, 1C, 1D, 1E and 1F. The electrically-addressable portions may be operated essentially as described above in relation to the lens 100 of FIGS. 1A, 1B, 1C, 1D, 1E and 1F. The advantage of lens 500 is that electrically-addressable lens portions 502A, 502B may be operated independently of one another, providing greater adaptability as to the amount of light that may be focussed onto the retina of a wearer and the amount of light that may be focussed in front of the retina of a wearer. Such an arrangement also provides greater adaptability in relation to the treatment options that may be provided to a wearer susceptible to myopic progression. The optical powers of the electrically-addressable lens portions 502A, 502B in the switched state may be different from one another, and in the unswitched state may be different from one another. This may be achieved, for example, by using different liquid crystal materials and/or using different thicknesses of liquid crystal.

The contact lenses of FIGS. 2, 3, 4A, 4B, 5A and 5B may be made using the process described above in relation to the contact lens of FIGS. 1A, 1B, 1C, 1D, 1E and 1F, subject to appropriate choice of alignment layers to ensure that the liquid crystal has the correct orientation.

A further example of an ophthalmic lens not covered by the claimed subject-matter of the present invention will now be described by way of example only with reference to Figures 1A, 1B, 1C, 1D, 1E and 1F. The liquid crystal cell is biconcave in cross-section, as described above in relation to Figures 1A, 1B, 1C, 1D, 1E and 1F. The alignment layers are provided by a rubbed polyimide that promotes planar alignment of the liquid crystal in an unswitched state. The liquid crystal is a positive dielectric anisotropy liquid crystal, in this case, E7 (Merck). In the unswitched state, the refractive index of the liquid crystal is about 1.7 and is very high compared to the refractive index of the surrounding lens material (the silicone hydrogel), which has a refractive index of about 1.42. This causes the liquid crystal cell to provide a relatively high negative optical power, which focuses light on the retina of the wearer. In the switched state, the refractive index of the liquid crystal is far lower (about 1.50). The difference in refractive index between the liquid crystal cell and the silicone hydrogel is lower than in the unswitched state, and therefore the optical power of the liquid crystal cell in the switched state is less negative than in the unswitched state. This less negative optical power in the switched state causes light to be focussed to a second location, typically in front of the retina of the wearer.

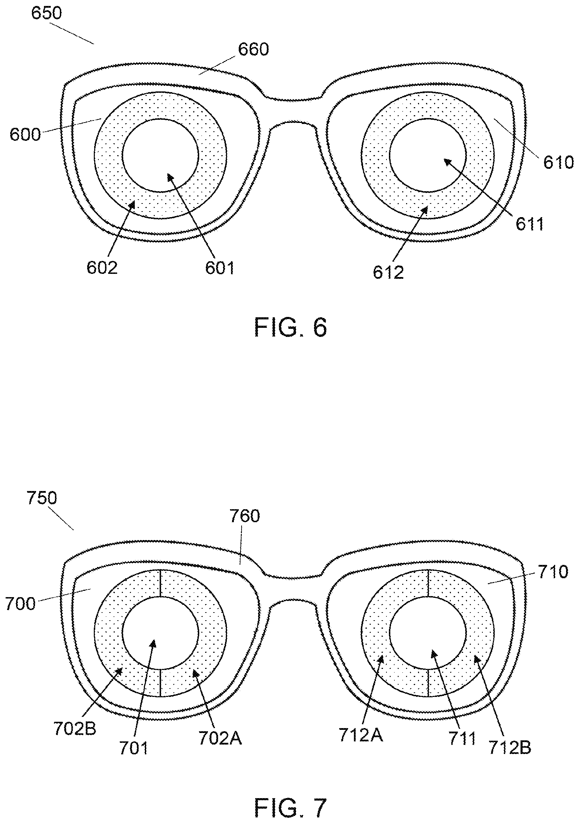

A further example of an ophthalmic lens not covered by the claimed subject-matter will now be described with reference to FIG. 6. FIG. 6 shows a pair of spectacles 650 comprising a frame 660 in which is mounted left 610 and right 600 ophthalmic lenses for controlling myopic progression (left and right are relative to when a person is wearing the spectacles, and not the position as shown in the figure). Lenses 600, 610 are generally made from suitably-refractive plastics material that is well-known to those skilled in the art. Each lens 600, 610 comprises a distance vision lens portion 601, 611 for correcting myopia, which focuses light to a first location (typically onto the retina of a wearer). Each distance vision lens portion 601, 611 is in the centre of the respective lens 600, 610, and is formed from the suitably-refractive plastics material. The distance vision lens portions 601, 611 may have an optical power of from -0.25D to -10D. Each lens 600, 610 comprises one electrically-addressable lens portion 602, 612, addressable to focus light to a second location, typically in front of the retina of a wearer. Each electrically-addressable lens portion 602, 612 is annular, and biconcave in cross-section. Electrically-addressable lens portions 602, 612 are formed from liquid crystal cells substantially as described above in relation to the lens 100 of FIGS. 1A, 1B, 1C, 1D, 1E and 1F. The electrically-addressable portions may be operated essentially as described above in relation to the lens 100 of FIGS. 1A, 1B, 1C, 1D, 1E and 1F. The second location to which light is focussed need not be the same for the two electrically-addressable lens portions 602, 612, but may be the same. The optical powers of the electrically-addressable lens portions 602, 612 in the switched state may be different from one another, and in the unswitched state may be different from one another. This may be achieved, for example, by using different liquid crystal materials and/or using different thicknesses of liquid crystal.

A further example of an ophthalmic lens in accordance with an embodiment of the present invention will now be described with reference to FIG. 7. FIG. 7 shows a pair of spectacles 750 comprising a frame 760 in which is mounted left 710 and right 700 ophthalmic lenses for controlling myopic progression. Lenses 700, 710 are generally made from suitably-refractive plastics material that is well-known to those skilled in the art. Each lens 700, 710 comprises a distance vision lens portion 701, 711 for correcting myopia, which focuses light to a first location (typically onto the retina of a wearer). Each distance vision lens portion 701, 711 is in the centre of the respective lens 700, 710, and is formed from the suitably-refractive plastics material. The distance vision lens portions 701, 711 may have an optical power of from -0.25D to -10D. Each lens 700, 710 comprises two electrically-addressable lens portion 702A, 702B, 712A, 712B, addressable to focus light to a second location, typically in front of the retina of a wearer. The second location to which light is focussed need not be the same for the four electrically-addressable lens portions 702A, 702B, 712A, 712B, but may be the same. Each electrically-addressable lens portion 702A, 702B, 712A, 702B is hemi-annular, and biconcave in cross-section. Electrically-addressable lens portions 702A, 712A are nasal portions, and electrically-addressable lens portions 702B, 712B are temporal portions. Electrically-addressable lens portions 702A, 702B, 712A, 712B are formed from liquid crystal cells substantially as described above in relation to the lens 100 of FIGS. 1A, 1B, 1C, 1D, 1E and 1F. The electrically-addressable portions may be operated essentially as described above in relation to the lens 100 of FIGS. 1A, 1B, 1C, 1D, 1E and 1F. The advantage of lenses 700, 710 is that electrically-addressable lens portions 702A, 702B, 712A, 712B may be operated independently of one another, and may be operated independently to take into account any asymmetry in the vision or eye anatomy of the wearer. The optical powers of the electrically-addressable lens portions 702A, 702B, 712A, 712B in the switched state may be different from one another, and in the unswitched state may be different from one another. This may be achieved, for example, by using different liquid crystal materials and/or using different thicknesses of liquid crystal.

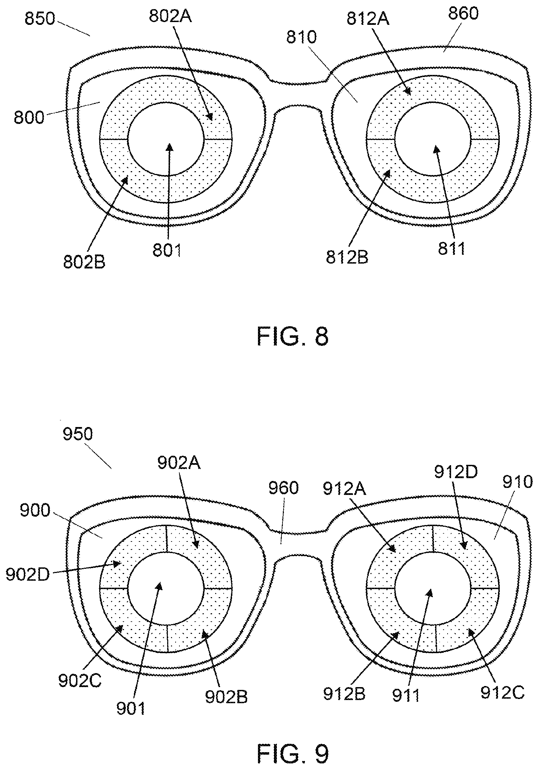

A further example of an ophthalmic lens in accordance with an embodiment of the present invention will now be described with reference to FIG. 8. FIG. 8 shows a pair of spectacles 850 comprising a frame 860 in which is mounted left 810 and right 800 ophthalmic lenses for controlling myopic progression. Lenses 800, 810 are generally made from suitably-refractive plastics material that is well-known to those skilled in the art. Each lens 800, 810 comprises a distance vision lens portion 801, 811 for correcting myopia, which focuses light to a first location (typically onto the retina of a wearer). Each distance vision lens portion 801, 811 is in the centre of the respective lens 800, 810, and is formed from the suitably-refractive plastics material. The distance vision lens portions 801, 811 may have an optical power of from -0.25D to -10D. Each lens 800, 810 comprises two electrically-addressable lens portion 802A, 802B, 812A, 812B, addressable to focus light to a first location, typically in front of the retina of a wearer. The second location to which light is focussed need not be the same for the four electrically-addressable lens portions 802A, 802B, 812A, 812B, but may be the same. Each electrically-addressable lens portion 802A, 802B, 812A, 802B is hemi-annular. Electrically-addressable lens portions 802A, 812A are superior portions, and electrically-addressable lens portions 802B, 812B are inferior portions. Electrically-addressable lens portions 802A, 802B, 812A, 812B are formed from liquid crystal cells substantially as described above in relation to the lens 100 of FIGS. 1A, 1B, 1C, 1D, 1E and 1F. The electrically-addressable portions may be operated essentially as described above in relation to the lens 100 of FIGS. 1A, 1B, 1C, 1D, 1E and 1F. The advantage of lenses 800, 810 is that electrically-addressable lens portions 802A, 802B, 812A, 812B may be operated independently of one another, and may be operated independently to take into account any asymmetry in the vision or eye anatomy of the wearer. The optical powers of the electrically-addressable lens portions 802A, 802B, 812A, 812B in the switched state may be different from one another, and in the unswitched state may be different from one another. This may be achieved, for example, by using different liquid crystal materials and/or using different thicknesses of liquid crystal.

A further example of an ophthalmic lens in accordance with an embodiment of the present invention will now be described with reference to FIG. 9. FIG. 9 shows a pair of spectacles 950 comprising a frame 960 in which is mounted left 910 and right 900 ophthalmic lenses for controlling myopic progression. Lenses 900, 910 are generally made from suitably-refractive plastics material that is well-known to those skilled in the art. Each lens 900, 910 comprises a distance vision lens portion 901, 911 for correcting myopia, which focuses light to a first location (typically onto the retina of a wearer). Each distance vision lens portion 901, 911 is in the centre of the respective lens 900, 910, and is formed from the suitably-refractive plastics material. The distance vision lens portions 901, 911 may have an optical power of from -0.25D to -10D. Each lens 900, 910 comprises four electrically-addressable lens portion 902A, 902B, 902C, 902D, 912A, 912B, 912C, 912D addressable to focus light to a second location, typically in front of the retina of a wearer. The second location to which light is focussed need not be the same for the eight electrically-addressable lens portions 902A, 902B, 902C, 902D, 912A, 912B, 912C, 912D, but may be the same. Each electrically-addressable lens portion 902A, 902B, 902C, 902D, 912A, 912B, 912C, 912D is quarter-annular. Electrically-addressable lens portions 902A, 902B, 912A, 912B are nasal portions, and electrically-addressable lens portions 902C, 902D, 912C, 912D are temporal portions. Electrically-addressable lens portions 902A, 902D, 912A, 912D are superior portions, and electrically-addressable lens portions 902B, 902C, 912B, 912C are inferior portions. Electrically-addressable lens portions 902A, 902B, 902C, 902D, 912A, 912B, 912C, 912D are formed from liquid crystal cells substantially as described above in relation to the lens 100 of FIGS. 1A, 1B, 1C, 1D, 1E and 1F. The electrically-addressable portions may be operated essentially as described above in relation to the lens 100 of FIGS. 1A, 1B, 1C, 1D, 1E and 1F. The advantage of lenses 900, 910 is that electrically-addressable lens portions 902A, 902B, 902C, 902D, 912A, 912B, 912C, 912D may be operated independently of one another, and may be operated independently to take into account any asymmetry in the vision or eye anatomy of the wearer. The optical powers of the electrically-addressable lens portions 902A, 902B, 902C, 902D, 912A, 912B, 912C, 912D in the switched state may be different from one another, and in the unswitched state may be different from one another. This may be achieved, for example, by using different liquid crystal materials and/or using different thicknesses of liquid crystal.

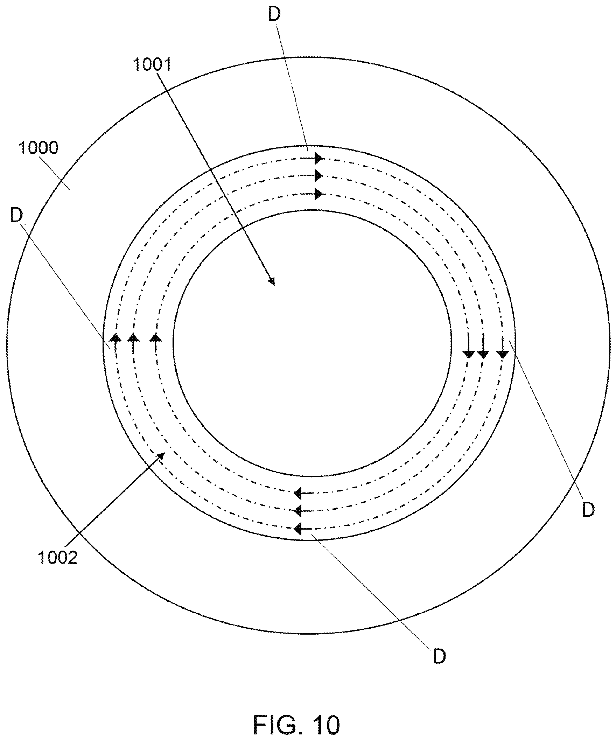

Another example of an ophthalmic lens not covered by the claimed subject-matter will now be described with reference to FIG. 10. FIG. 10 shows an ophthalmic lens for controlling myopic progression, the lens being denoted generally by reference numeral 1000. The lens 1000 is a soft contact lens made from a silicone hydrogel material (SiHy), although the contact lens may be made from other materials. The lens 1000 comprises a distance vision lens portion 1001 for correcting myopia, which focuses light to a first location, typically onto a retina of a wearer. The distance vision lens portion 1001 is in the centre of the lens 1000, and is formed from a silicone hydrogel material. The distance vision lens portion 1001 may have an optical power of from -0.25D to -10D. The lens 1000 comprises one electrically-addressable lens portion 1002, addressable to focus light to a second location, typically in front of the retina of a wearer. Electrically-addressable lens portion 1002 is annular. Electrically-addressable lens portion 1002 is formed from a liquid crystal cell substantially as described above in relation to the lens 100 of FIGS. 1A, 1B, 1C, 1D, 1E and 1F, with the following adjustment. Instead of the alignment layer 131 being rubbed in a radial direction to confer a preferred alignment on the liquid crystal 140 when the liquid crystal is in a switched, planar state, the alignment layer 131 is rubbed circumferentially, in the direction shown by the arrows in FIG. 10. This circumferential rubbing means that, in the switched state, the arrangement of the director D of the liquid crystal is shown by the directions of the arrows as shown in FIG. 10. This arrangement provides an optical response that is polarisation-independent, in so far as this arrangement being effective for all polarisations of light. Electrically-addressable portion 1002 may be operated essentially as described above in relation to the lens 100 of FIGS. 1A, 1B, 1C, 1D, 1E and 1F.

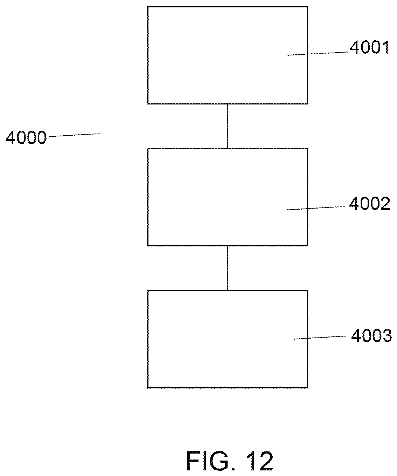

An example of a method of controlling myopic progression not covered by the claimed subject-matter will now be described by way of example only with reference to FIGS. 1A, 1B, 1C, 1D, 1E, 1F and 12. The method is denoted generally by reference numeral 4000, and comprises providing 4001 a wearer suffering from myopia or at risk of developing myopia with an ophthalmic lens 100 comprising at least one electrically-addressable lens portion 102 addressable to focus light to a second location (for example, in front of the retina of the wearer). In the present case, contact lens 100 is placed on the eyeball of a wearer. Lens 100 is substantially as described above in relation to FIGS. 1A, 1B, 1C, 1D, 1E and 1F.

The method 4000 comprises causing 4002 the electrically-addressable lens portion 102 to change its focal point and/or optical power. In the present method, the lens 100 is initially in a first operating state in which the electrically-addressable lens portion 102 focusses light to the second location (for example, in front of a retina of the wearer). At a predetermined time, the electrically-addressable lens portion 102 is switched from the first operating state to a second operating state. In the second operating state, the liquid crystal 140 of liquid crystal cell 110 is switched from a homeotropic to a planar alignment, as discussed above in relation to FIG. 1A, 1B, 1C, 1D, 1E and 1F. In the second operating state, electrically-addressable lens portion 102 focusses light to a first location (for example, onto the retina). Lens 100 is maintained in the second operating state for a pre-determined period of time, in the present case, 10 minutes, subject to their being no override provided by the wearer.

However, in method 4000, the wearer decides that it is desirable for the electrically-addressable lens portion 102 to focus light to the second location (in this case, in front of the retina). The method 4000 therefore comprises changing 4003 the electrically-addressable lens portion 102 from the second operational state to the first operating state by removing the switching voltage from the liquid crystal cell. The liquid crystal will then revert to the homeotropic alignment shown in FIGS. 1C and 1E.

A further example of a method of controlling myopic progression in accordance with a merely illustrative embodiment not covered by the claimed subject-matter will now be described by way of example only. The method is denoted generally by reference numeral 4000, and comprises providing 4001 a wearer suffering from myopia or at risk of developing myopia with an ophthalmic lens 100 comprising at least one electrically-addressable lens portion 102 addressable to focus light to a second location, optionally in front of the retina of the wearer. In the present case, a contact lens is placed on the eyeball of a wearer or a pair of spectacles could be worn by the wearer.

The method 4000 comprises causing 4002 the electrically-addressable lens portion 102 to change its focal point and/or optical power. In the present method, the lens is initially in a first operating state in which the electrically-addressable lens portion focusses light to a first location (in this case, onto the retina of the wearer), thereby providing corrected distance vision. At a predetermined time, the electrically-addressable lens portion 102 is switched from the first operating state to a second operating state. In the second operating state, the liquid crystal of the liquid crystal cell is switched. In the second operating state, electrically-addressable lens portion focusses light to a second location closer to the lens than the first location, in this case, in front of the retina. Lens 100 is maintained in the second operating state for a pre-determined period of time, in the present case, 10 minutes, subject to their being no override provided by the wearer.

However, in method 4000, the wearer decides that it is desirable for the electrically-addressable lens portion to focus light to the first location i.e. on the retina so as to provide corrected distance vision once more. The method 4000 therefore comprises changing 4003 the electrically-addressable lens portion from the second operational state to the first operating state by removing the switching voltage from the liquid crystal cell.

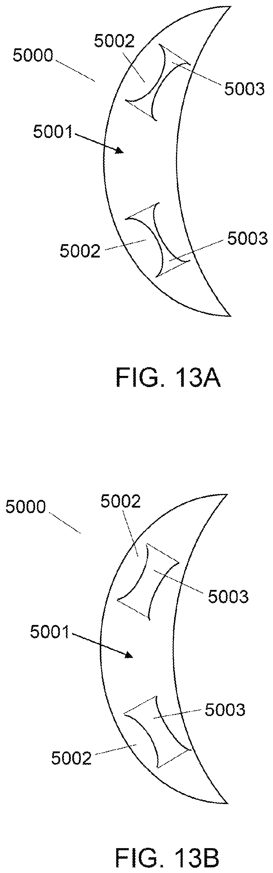

The examples above demonstrate how a switchable liquid crystal cell may be used to alter the effective refractive index of the liquid crystal cell, thereby changing the difference in refractive index between the liquid crystal cell and the surrounding contact lens material, thereby changing the effective optical power of the liquid crystal cell. In the examples mentioned above, the shape of the liquid crystal cell remains the same, in this case, a bioconcave shape. It is possible to provide an electrically-switchable lens portion in which the difference in refractive index between the lens material and the material of the electrically-switchable lens portion remains the same, but the shape of the electrically-switchable lens portion changes (and therefore the optical power of the electrically-switchable lens portion changes). In this connection, a further example of an ophthalmic lens not covered by the claimed subject-matter will now be described by way of example only with reference to FIGS. 13A and 13B.

FIGS. 13A and 13B show an ophthalmic lens for controlling myopic progression, the lens being denoted generally by reference numeral 5000. The lens 5000 is a soft contact lens made from a silicone hydrogel having a refractive index of about 1.42, although the contact lens may be made from other materials. The lens 5000 comprises a distance vision lens portion 5001 for correcting myopia, which focuses light to a first location (typically, in use, on to a retina of a wearer). The distance vision lens portion 5001 is in the centre of the lens 5000, and is formed from silicone hydrogel. The distance vision lens portion 101 may have an optical power of from -0.25D to -10D. The lens 5000 comprises an annular electrically-addressable lens portion 5002 addressable to focus light to a second location closer to the lens than the first location, typically in front of the retina of a wearer. Electrically-addressable lens portion 5002 has a generally biconcave shape in cross-section and is filled with a fluid having a refractive index of about 1.47 in an expandable chamber 5003. In the unswitched state shown in FIG. 13A, the volume of fluid in the expandable chamber 5003 is relatively low and the chamber 5003 has a pronounced biconcave shape. Given that the refractive index of fluid inside the chamber is greater than that of the surrounding silicone hydrogel, the electrically-addressable lens portion 5002 has a relatively high negative optical power that focusses light onto the retina of a wearer. To achieve the switched state, more fluid is pumped into chamber 5003 from a reservoir (not shown) in fluid communication with chamber 5003. This produces an electrically-addressable lens portion 5002 with a much less pronounced biconcave shape, which provides a less negative optical power than in the unswitched state, thereby focussing light in front of the retina of the wearer. The reservoir (not shown) helps to conserve the volume of the chamberreservoir system. The reservoir is typically located in a peripheral position.

Reference should be made to the claims for determining the true scope of the present disclosure. It will also be appreciated by the reader that integers or features of the disclosure that are described as advantageous, convenient or the like are optional, and do not limit the scope of the independent claims. Moreover, it is to be understood that such optional integers or features, whilst of possible benefit in some embodiments of the disclosure, may not be desirable and may therefore be absent in other embodiments.

The examples above demonstrate how liquid crystals may be used in an ophthalmic lens to control the focal point of at least some of the light passing through that lens. Those skilled in the art will realise that other arrangements may be used. For example, a refractive medium may be introduced into, or removed from a space, the thickness of which is variable, depending on how much refractive medium is introduced into the space.

The examples above demonstrate how achiral nematic liquid crystals may be used in an ophthalmic lens. Those skilled in the art will realise that chiral nematic liquid crystals and/or nematic liquid crystals doped with a chiral dopant may be used. Furthermore, other types of liquid crystal, such as smectic or discotic liquid crystals, may be used.

The examples above demonstrate how liquid crystal cells that are biconcave in cross-section may be used. Those skilled in the art will realise that other shapes may be used, for example, biconvex or convex-concave.

## Claims

1. An ophthalmic lens (100, 200, 300, 400, 500, 600, 610, 700, 710, 800, 810, 900, 910, 1000) for controlling myopic progression, the ophthalmic lens comprising a distance vision lens portion (101, 201, 301, 401, 501, 601, 611, 701, 711, 801, 811, 901, 911, 1001) for correcting myopia by focussing light to a first location and a plurality of electrically-addressable lens portions (102, 202A, 202B, 302A, 302B, 302C, 302D, 402A, 402B, 502A, 502B, 602, 612, 702A, 702B, 712A, 712B, 802A, 802B, 812A, 812B, 902A, 902B, 902C, 902D, 912A, 912B, 912C, 912D, 1002) addressable to focus light to a second location closer to the lens than the first location;
**characterised in that**:
at least one of the plurality of electrically-addressable lens portions is configured to focus light to the first location in the absence of an electrical signal to the electrically-addressable lens portion; and
at least one of the plurality of electrically-addressable lens portions is configured to focus light to a second location in the absence of an electrical signal to the electrically-addressable lens portion,
wherein the second location is optionally the same for each of the plurality of electrically-addressable lens portions.

2. The ophthalmic lens according to claim 1, in which the distance vision lens portion is an inner lens portion, and the at least one electrically-addressable lens portion is an outer lens portion.

3. The ophthalmic lens according to claim 1, in which at least one of the plurality of electrically-addressable lens portions is located inward of the distance vision lens portion.

4. The ophthalmic lens according to any preceding claim, in which the distance vision lens portion has a fixed optical power, when on the eye of a wearer, or in which the optical power of the distance vision lens portion is variable.

5. The ophthalmic lens according to claim 4, in which the optical power of the distance vision portion is variable, and the distance vision lens portion is electrically-addressable between a first configuration in which the distance vision lens portion is configured to correct myopia and a second, different, configuration.

6. The ophthalmic lens according to any preceding claim, in which at least one of the plurality of electrically-addressable lens portions is addressable to focus light into one of a plurality of different second locations and/or in which at least one of the plurality of electrically-addressable lens portions is addressable to focus light into one of a plurality of different third locations further from the lens than the first and second locations.

7. The ophthalmic lens according to any preceding claim, in which the plurality of electrically-addressable lens portions comprises a first electrically-addressable lens portion and a second electrically-addressable lens portion that (i) together form an annulus or (ii) are annular, or the plurality of electrically addressable lens portions comprises first, second, third and fourth electrically-addressable lens portions, each of the first second, third and fourth annular portions comprising an annular sector, the annular sectors together forming an annulus.

8. The ophthalmic lens according to any preceding claim, in which at least one of the plurality of electrically-addressable lens portions is user-controllable.

9. The ophthalmic lens according to any preceding claim, in which at least one of the plurality of electrically-addressable lens portions is provided by a liquid crystal cell (110) comprising a liquid crystal (140).

10. The ophthalmic lens according to claim 9, in which the liquid crystal cell has a first state, in which the electrically-addressable lens portion comprising the liquid crystal cell is configured to focus light to the second location, and optionally the liquid crystal cell is changeable between the first state and a second state, in which second state the electrically-addressable lens portion comprising the liquid crystal cell is configured to focus light to the first location.

11. The ophthalmic lens according to claim 9 or claim 10, in which the liquid crystal is disposed between two surfaces, each of which is provided by an alignment layer for aligning liquid crystal, at least one alignment layer being configured to align the liquid crystal in a homeotropic configuration, and at least one alignment layer being configured to align the liquid crystal in a homeotropic configuration when the liquid crystal is in one of a switched and an unswitched state, and to align the liquid crystal in a preferred planar configuration when the liquid crystal is in the other of the switched and unswitched states.

12. The ophthalmic lens according to any preceding claim, wherein more than one of the plurality of electrically-addressable lens portions is addressable to focus light to the first location.

13. The ophthalmic lens according to any preceding claim, in which the ophthalmic lens is a contact lens or a spectacle lens.

14. A system (3000) for controlling myopic progression, the system comprising an ophthalmic lens in accordance with any preceding claim and a user control module (3002) for controlling the operation of the ophthalmic lens.

15. Spectacles (750, 850, 950) comprising at least one ophthalmic lens in accordance with claim 13.

## Patentansprüche

1. Eine ophthalmische Linse (100, 200, 300, 400, 500, 600, 610, 700, 710, 800, 810, 900, 910, 1000) zur Kontrolle des Fortschreitens der Kurzsichtigkeit, wobei die Augenlinse einen Fernsichtlinsenabschnitt (101, 201, 301, 401, 501, 601, 611, 701, 711, 801, 811, 901, 911, 1001) zum Korrigieren von Myopie durch Fokussieren von Licht auf einen ersten Ort und eine Mehrzahl von elektrisch adressierbaren Linsenabschnitten (102, 202A, 202B, 302A, 302B, 302C, 302D, 402A, 402B, 502A, 502B, 602, 612, 702A, 702B, 712A, 712B, 802A, 802B, 812A, 812B, 902A, 902B, 902C, 902D, 912A, 912B, 912C, 912D, 1002) adressierbar, um zu fokussieren Licht an einen zweiten Ort, der näher an der Linse liegt als der erste Ort, **dadurch gekennzeichnet, dass** mindestens einer der Mehrzahl der elektrisch adressierbaren Linsenabschnitte so konfiguriert ist, dass er Licht auf den ersten Ort fokussiert, wenn kein elektrisches Signal an den elektrisch adressierbaren Linsenabschnitt angelegt wird; und
mindestens einer der mehreren elektrisch adressierbaren Linsenabschnitte so konfiguriert ist, dass dieser Licht auf einen zweiten Ort fokussiert, wenn kein elektrisches Signal an den elektrisch adressierbaren Linsenabschnitt angelegt wird, wobei der zweite Ort optional derselbe ist für jeden der mehreren elektrisch adressierbaren Linsenabschnitte.

2. Die ophthalmische Linse gemäß Anspruch 1, wobei der Fernsichtlinsenabschnitt ein innerer Linsenabschnitt ist und der mindestens eine elektrisch adressierbare Linsenabschnitt ein äußerer Linsenabschnitt ist.

3. Die ophthalmische Linse nach Anspruch 1, wobei mindestens einer der Mehrzahl der elektrisch adressierbaren Linsenabschnitte innerhalb des Fernsichtlinsenabschnitts angeordnet ist.

4. Die ophthalmische Linse nach einem der vorstehenden Ansprüche, wobei der Fernsichtlinsenabschnitt eine feste optische Stärke aufweist, wenn er sich auf dem Auge eines Trägers befindet, oder wobei die optische Stärke des Fernsichtlinsenabschnitts variabel ist.

5. Die ophthalmische Linse gemäß Anspruch 4, wobei die optische Stärke des Fernsichtabschnittes variabel ist und der Fernsichtlinsenbereich elektrisch adressierbar ist zwischen einer ersten Konfiguration, in der der Fernsichtlinsenabschnitt zur Korrektur von Kurzsichtigkeit konfiguriert ist, und einer zweiten, davon abweichenden Konfiguration.

6. Die ophthalmische Linse gemäß einem der vorstehenden Ansprüche, bei der mindestens einer der Mehrzahl der elektrisch adressierbaren Linsenabschnitte adressierbar ist, um Licht auf einen von mehreren verschiedenen zweiten Orten zu fokussieren, und/oder bei der mindestens einer der Mehrzahl der elektrisch adressierbaren Linsenabschnitte adressierbar ist, um Licht auf einen von mehreren verschiedenen dritten Positionen, die weiter von der Linse entfernt sind als die erste und zweite Position, fokussieren kann.

7. Die ophthalmische Linse gemäß einem der vorstehenden Ansprüche, wobei die Mehrzahl elektrisch adressierbarer Linsenabschnitte einen ersten elektrisch adressierbaren Linsenabschnitt und einen zweiten elektrisch adressierbaren Linsenabschnitt umfasst, die (i) zusammen einen Ring bilden oder (ii) ringförmig sind, und optional die Mehrzahl elektrisch adressierbarer Linsenabschnitte umfasst einen ersten, zweiten, dritten und vierten elektrisch adressierbaren Linsenabschnitt, wobei jeder der ersten, zweiten, dritten und vierten ringförmigen Abschnitte einen ringförmigen Sektor umfasst, wobei die ringförmigen Sektoren zusammen einen Ring bilden.

8. Die ophthalmische Linse gemäß einem der vorstehenden Ansprüche, wobei mindestens einer der Mehrzahl der elektrisch adressierbaren Linsenabschnitte vom Benutzer steuerbar ist.

9. Die ophthalmische Linse gemäß einem der vorstehenden Ansprüche, wobei mindestens einer der Mehrzahl der elektrisch adressierbaren Linsenabschnitte durch eine Flüssigkristallzelle (110) bereitgestellt wird, die einen Flüssigkristall (140) umfasst.

10. Die ophthalmische Linse gemäß Anspruch 9, wobei die Flüssigkristallzelle einen ersten Zustand aufweist, in dem der elektrisch adressierbare Linsenabschnitt, der die Flüssigkristallzelle umfasst so konfiguriert ist, dass er Licht auf den zweiten Ort fokussiert, und wobei die Flüssigkristallzelle optional zwischen dem ersten Zustand und einem zweiten Zustand umgeschaltet werden kann, wobei in dem zweiten Zustand der elektrisch adressierbare Linsenabschnitt, der die Flüssigkristallzelle umfasst, so konfiguriert ist, dass er Licht auf den ersten Ort fokussiert.

11. Die ophthalmische Linse gemäß Anspruch 9 oder Anspruch 10, wobei der Flüssigkristall zwischen zwei Oberflächen angeordnet, von denen jede mit einer Ausrichtungsschicht zum Ausrichten des Flüssigkristalls versehen ist, wobei mindestens eine Ausrichtungsschicht so konfiguriert ist, dass sie den Flüssigkristall in einer homöotropen Konfiguration ausrichtet, und mindestens eine Ausrichtungsschicht so konfiguriert ist, dass sie den Flüssigkristall in einer homöotropen Konfiguration ausrichtet, wenn sich der Flüssigkristall in einem geschalteten oder einem nicht geschalteten Zustand befindet, und dass sie den Flüssigkristall in einer bevorzugten planaren Konfiguration auszurichten, wenn sich der Flüssigkristall im anderen der geschalteten und ungeschalteten Zustände befindet.

12. Die ophthalmische Linse gemäß einem der vorstehenden Ansprüche, wobei mehr als einer der Mehrzahl der elektrisch adressierbaren Linsenabschnitte adressierbar ist, um Licht auf den ersten Ort zu fokussieren.

13. Die ophthalmische Linse gemäß einem der vorstehenden Ansprüche, wobei die ophthalmische Linse eine Kontaktlinse oder eine Brillenglaslinse ist.

14. Ein System (3000) zur Kontrolle des Fortschreitens von Kurzsichtigkeit, wobei das System eine ophthalmische Linse gemäß einem der vorstehenden Ansprüche und ein Benutzersteuerungsmodul (3002) zur Steuerung des Betriebs der ophthalmischen Linse umfasst.

15. Brillen (750, 850, 950) mit mindestens einer Augenlinse gemäß Anspruch 13.

## Revendications

1. Lentille ophtalmique (100 ; 200, 300, 400, 500, 600, 610, 700, 710, 800, 810, 900, 910, 1000) pour contrôler la progression de la myopie, la lentille ophtalmique comprenant une partie (101, 201, 301, 401, 501, 601, 611, 701, 711, 801, 811, 901, 911, 1001) de lentille pour la vision de loin pour corriger la myopie en focalisant la lumière vers un premier emplacement et une pluralité de parties (102, 202A, 202B, 302A, 302B, 302C, 302D, 402A, 402B, 502A, 502B, 602, 612, 702A, 702B, 712A, 712B, 802A, 802B, 812A, 812B, 902A, 902B, 902C, 902D, 912A, 912B, 912C, 912D, 1002) de lentille adressables électriquement adressables pour focaliser la lumière vers un deuxième emplacement plus proche de la lentille que le premier emplacement ;
**caractérisée en ce que** :
au moins l'une parmi la pluralité de parties de lentille adressables électriquement est configurée pour focaliser la lumière vers le premier emplacement en l'absence d'un signal électrique vers la partie de lentille adressable électriquement ; et
au moins l'une parmi la pluralité de parties de lentille adressables électriquement est configurée pour focaliser la lumière vers un deuxième emplacement en l'absence d'un signal électrique vers la partie de lentille adressable électriquement,
dans laquelle le deuxième emplacement est facultativement le même pour chacune parmi la pluralité de parties de lentille adressables électriquement.

2. Lentille ophtalmique selon la revendication 1, dans laquelle la partie de lentille pour la vision de loin est une partie de lentille interne, et l'au moins une partie de lentille adressable électriquement est une partie de lentille externe.

3. Lentille ophtalmique selon la revendication 1, dans laquelle au moins l'une parmi la pluralité de lentille adressables électriquement est située vers l'intérieur de la partie de lentille pour la vision de loin.

4. Lentille ophtalmique selon une quelconque revendication précédente, dans laquelle la partie de lentille pour la vision de loin présente une puissance optique fixe lorsqu'elle est placée sur l'oeil d'un porteur, ou dans laquelle la puissance optique de la partie de lentille pour la vision de loin est variable.

5. Lentille ophtalmique selon la revendication 4, dans laquelle la puissance optique de la partie pour la vision de loin est variable, et la partie de lentille pour la vision de loin est adressable électriquement entre une première configuration dans laquelle la partie de lentille pour la vision de loin est configurée pour corriger la myopie et une seconde configuration différente.

6. Lentille ophtalmique selon une quelconque revendication précédente, dans laquelle au moins l'une parmi la pluralité de parties de lentille adressables électriquement est adressable pour focaliser la lumière dans l'un d'une pluralité de deuxièmes emplacements différents et/ou dans laquelle au moins l'une parmi la pluralité de parties de lentille adressables électriquement est adressable pour focaliser la lumière dans l'un d'une pluralité de troisièmes emplacements différents plus éloignés de la lentille que les premiers et deuxièmes emplacements.

7. Lentille ophtalmique selon une quelconque revendication précédente, dans laquelle la pluralité de parties de lentille adressables électriquement comprend une première partie de lentille adressable électriquement et une deuxième partie de lentille adressable électriquement qui (i) forment ensemble un anneau ou (ii) sont annulaires, ou
la pluralité de parties de lentille adressables électriquement comprend des première, deuxième, troisième et quatrième parties de lentille adressables électriquement, chacune des première, deuxième, troisième et quatrième parties annulaires comprenant un secteur annulaire, les secteurs annulaires formant ensemble un anneau.

8. Lentille ophtalmique selon une quelconque revendication précédente, dans laquelle au moins l'une parmi la pluralité de lentille adressables électriquement est commandable par l'utilisateur.

9. Lentille ophtalmique selon une quelconque revendication précédente, dans laquelle au moins l'une parmi la pluralité de lentille adressables électriquement est fournie par une cellule (110) à cristaux liquides comprenant un cristal liquide (140).

10. Lentille ophtalmique selon la revendication 9, dans laquelle la cellule à cristaux liquides présente un premier état, dans lequel la partie de lentille adressable électriquement comprenant la cellule à cristaux liquides est configurée pour focaliser la lumière vers le deuxième emplacement, et facultativement la cellule à cristaux liquides peut passer du premier état à un second état, second état dans lequel la partie de lentille adressable électriquement comprenant la cellule à cristaux liquides est configurée pour focaliser la lumière vers le premier emplacement.

11. Lentille ophtalmique selon la revendication 9 ou la revendication 10, dans laquelle le cristal liquide est disposé entre deux surfaces, chacune d'elles étant fournie par une couche d'alignement pour aligner le cristal liquide, au moins une couche d'alignement étant configurée pour aligner le cristal liquide dans une configuration homéotrope, et au moins une couche d'alignement étant configurée pour aligner le cristal liquide dans une configuration homéotrope lorsque le cristal liquide est dans l'un des états commuté et non commuté, et pour aligner le cristal liquide dans une configuration plane préférée lorsque le cristal liquide est dans l'autre des états commuté et non commuté.

12. Lentille ophtalmique selon une quelconque revendication précédente, dans laquelle plus d'une parmi la pluralité de parties de lentille adressables électriquement sont adressables pour focaliser la lumière vers le premier emplacement.

13. Lentille ophtalmique selon une quelconque revendication précédente, la lentille ophtalmique étant une lentille de contact ou un verre de lunettes.

14. Système (3000) pour contrôler la progression de la myopie, le système comprenant une lentille ophtalmique selon une quelconque revendication précédente et un module (3002) de commande utilisateur pour commander le fonctionnement de la lentille ophtalmique.

15. Lunettes (750, 850, 950) comprenant au moins une lentille ophtalmique selon la revendication 13.
